Europäisches Patentamt

European Patent Office

Office européen des brevets

(19)

(11) Veröffentlichungsnummer: **0 256 519**
**B1**

(12) **EUROPÄISCHE PATENTSCHRIFT**

(45) Veröffentlichungstag der Patentschrift:
15.03.89

(21) Anmeldenummer: **87111710.7**

(22) Anmeldetag: **13.08.87**

(51) Int. Cl.⁴: **D04B 15/48**, D03D 47/36,
B65H 51/22, B65H 59/38

(54) **Fadenliefervorrichtung mit elektronischer Fadenspannungsregelung.**

(30) Priorität: **16.08.86 DE 3627731**

(43) Veröffentlichungstag der Anmeldung:
**24.02.88 Patentblatt 88/8**

(45) Bekanntmachung des Hinweises auf die Patenterteilung:
**15.03.89 Patentblatt 89/11**

(84) Benannte Vertragsstaaten:
**DE ES GB IT**

(56) Entgegenhaltungen:
**DD-A- 232 937**
**DE-A- 2 512 155**
**DE-B- 1 585 073**
**US-A- 3 858 416**

(73) Patentinhaber: **Memminger, Gustav, Heideweg 65,
D-7129 Freudenstadt(DE)**

(72) Erfinder: **Memminger, Gustav, Heideweg 65,
D-7290 Freudenstadt(DE)**
Erfinder: **Kühn, Falk, Zimmerplatz 7,
D-7407 Kiebingen(DE)**
Erfinder: **Fabschitz, Heinz, Narringerstrasse 18 B,
D-8152 Westerham(DE)**

(74) Vertreter: **Rüger, Rudolf, Dr.-Ing. et al,
Webergasse 3 Postfach 348,
D-7300 Esslingen/Neckar(DE)**

## Beschreibung

Die Erfindung betrifft eine Fadenliefervorrichtung mit elektronischer Fadenspannungsregelung für fadenverarbeitende Textilmaschinen, insbesondere Strick- oder Wirkmaschinen, mit einem den Faden vorzugsweise im wesentlichen schlupflos fördernden, drehbar gelagerten Fadenlieferelement, dem Fadenleitelemente zugeordnet sind und das mit einem es antreibenden frequenzgeregelten elektrischen Motor gekuppelt ist, mit im Fadenlaufweg hinter dem Fadenlieferelement liegenden und den von diesem ablaufenden Faden überwachenden Fadenspannungs-Fühlmitteln, die ein elektrisches Signal abgeben, sowie mit einer dieses Signal verarbeitenden elektrischen Regeleinrichtung, die den Motor im Sinne der Konstanthaltung der überwachten Fadenspannung auf einem eingestellten Sollwert mit einem Frequenzsignal speist.

Bei einer aus der US-A 3 858 416 bekannten Fadenliefervorrichtung dieser Art geben die ein linearbewegliches, den darüberlaufenden Faden abtastendes Fadenführelement aufweisenden Fühlmittel ein für die Fadenspannung kennzeichnendes analoges Spannungssignal ab, das mit einer fest eingestellten Sollwert-Spannung verglichen wird.

Die der Regelabweichung entsprechende Differenzspannung wird verstärkt und zur Erzeugung eines Stellsignales verarbeitet, das als Frequenzsignal dem frequenzgeregelten Antriebsmotor des Fadenlieferelementes zugeleitet wird. Dem Antriebsmotor ist ein Signalgeber zugeordnet, der ein für die Drehzahl des Antriebsmotors und damit die pro Zeiteinheit gelieferte Fadenmenge kennzeichnendes Signal abgibt, das – abhängig von der Stellung eines Umschalters – mit einem in eine analoge Spannung umgewandelten Synchronisationssignal verglichen werden kann, welches von einem die Drehzahl des Nadelzylinders der mit der Fadenliefervorrichtung ausgerüsteten Rundstrickmaschine messenden zweiten Signalgeber geliefert wird. Die so gewonnene, der Differenzspannung entsprechende Regelabweichung wird von dem Regler zu einem entsprechenden Stellsignal für den Motor verarbeitet, so daß die Drehzahl des Motors und damit die Fadenliefergeschwindigkeit mit der Drehzahl des Nadelzylinders der Rundstrickmaschine synchronisiert wird. Durch entsprechende Handbetätigung des Umschalters kann somit wahlweise konstante Fadenspannung oder eine in einer festen Abhängigkeit von der Drehzahl der Rundstrickmaschine stehende Fadenliefermenge eingeregelt werden.

Die grundsätzliche Schwierigkeit einer solchen Fadenliefervorrichtung besteht darin, daß sie schnellen Fadenspannungs- oder -laufgeschwindigkeitsänderungen nicht zu folgen vermag. Beispielsweise im sogenannten Ringelbetrieb treten aber bei Rundstrickmaschinen extrem schnell ablaufende Änderungen des Fadenverbrauches auf, was in geringerem Maße auch für Jacquard-Maschinen gilt. So beträgt z.B. bei einer herkömmlichen Rundstrickmaschine der Fadenverbrauch während des Ringelbetriebes an einer Strickstelle typischerweise ca. 4 m/sek. Wenn nun der Ringelapparat programmgemäß den mit dieser Geschwindigkeit laufenden Faden auslegt und gleichzeitig einen neuen, bisher nicht verarbeiteten und deshalb stillstehenden Faden einlegt, so erfolgt dieser Fadenwechsel innerhalb von Bruchteilen von Millisekunden. Dies bedeutet, daß der alte Faden innerhalb dieser kurzen Zeitspanne von seiner Fadenlaufgeschwindigkeit von ca. 4 m/sek. zum Stillstand gebracht und der neue Faden innerhalb der gleichen kurzen Zeitspanne auf die volle Fadenliefergeschwindigkeit von 4 m/sek. beschleunigt werden muß. Schon das unvermeidbare Trägheitsmoment des Motors und des Fadenlieferelementes schließen eine so rasche Beschleunigung aus, mit dem Ergebnis, daß in dem Faden unzulässige Spannungsspitzen auftreten. Andererseits gestattet es die Auslaufcharakteristik des Motors nicht, diesen in der erforderlich kurzen Zeitspanne stillzusetzen, was dazu führt, daß sich aus dem bis zum Stillstand des Fadenlieferelementes überlieferten Faden Schlaufen bilden und die Fadenspannung völlig zusammenbricht.

Hinzu kommt noch, daß bei einem frequenzgeregelten Motor, d.h. einem Synchronmotor oder einem Schrittmotor, der wegen seiner exakten Regelbarkeit von besonderem Vorteil ist, die Frequenz beim Anlaufen und beim Stillsetzen nicht beliebig schnell von der Startfrequenz auf die dem stationären Betrieb entsprechende Frequenz erhöht bzw. von dieser Frequenz auf die Stoppfrequenz abgesenkt werden kann, weil sonst der Motor nicht mehr in der Lage ist, mit seiner Drehzahl dieser raschen Frequenzänderung zu folgen; er fällt außer Tritt und bleibt stehen.

Die bekannte Fadenliefervorrichtung ist aus diesen Gründen nur für fadenverbrauchende Textilmaschinen geeignet, bei denen keine besonders schnellen oder abrupten Änderungen des Fadenverbrauches auftreten. Dies gilt bspw. für ungemusterte Schlauchware etc. arbeitende Rundstrickmaschinen.

Aufgabe der Erfindung ist es deshalb, eine Fadenliefervorrichtung mit elektronischer Fadenspannungsregelung zu schaffen, die bei einfachem, betriebssicherem Aufbau und geringem Leistungsbedarf für Einsatzzwecke, bspw. im Ringelbetrieb arbeitende Rundstrickmaschinen, geeignet ist, bei denen ein sehr rasch und abrupt wechselnder Fadenverbrauch auftritt und gewährleistet werden muß, daß trotzdem der Faden mit möglichst konstanter Fadenspannung positiv geliefert wird.

Zur Lösung dieser Aufgabe ist die eingangs genannte Fadenliefervorrichtung erfindungsgemäß dadurch gekennzeichnet, daß auf dem Fadenlaufweg zwischen dem Fadenlieferelement und den Fadenspannungs-Fühlmitteln eine Einrichtung zur Bildung einer Fadenreserve angeordnet ist, deren Größe zur Deckung des Fadenbedarfes während des Anlaufes des Motors ausreichend bemessen ist, daß dieser Einrichtung Mittel zugeordnet sind, um die Fadenreserve spätestens nach dem Anlaufen des Motors selbsttätig wieder auf eine Ausgangsgröße aufzufüllen, und daß die Regeleinrichtung eine Schaltungsanordnung aufweist, die die zeitliche Änderung der Frequenz des Frequenzsignales zumindest während des Anlaufes des Motors derart begrenzt, daß der belastete Motor der Frequenzänderung zu folgen vermag.

Wenn bei dieser Fadenliefervorrichtung eine abrupte Änderung des Fadenbedarfes auftritt, bspw. indem der Ringelapparat den bisher stillstehenden Faden einlegt, so wird der augenblicklich erforderliche Fadenbedarf aus der Fadenreserve gedeckt, während gleichzeitig der Motor beschleunigt wird. Die Beschleunigung des Motors erfolgt entsprechend dessen Anlaufcharakteristik, ohne daß die Gefahr besteht, daß der Motor außer Tritt fällt. Andererseits ist der Faden während seiner Entnahme aus der Fadenreserve keinen übermäßigen Spannungsbeanspruchungen ausgesetzt.

Um zu vermeiden, daß bei einer plötzlichen starken Verringerung des Fadenbedarfs, wie sie bspw. auftritt, wenn der Ringelapparat den Faden auslegt, das mit dem Motor gekuppelte auslaufende Fadenlieferelement von dem Fadenverbraucher nicht mehr aufgenommenen und deshalb überschüssigen Faden nachliefert, der zur Bildung von Schlaufen und zum Zusammenbruch der Fadenspannung führt, ist es vorteilhaft, wenn die Schaltungsanordnung der Regelungseinrichtung die Änderung der Frequenz des Frequenzsignales auch zumindest während des Auslaufes des Motors derart begrenzt, daß der belastete Motor der Frequenzänderung zu folgen vermag, wobei der Einrichtung zur Bildung der Fadenreserve Mittel zugeordnet sind, um die während des Auslaufs gelieferte überschüssige Fadenmenge in die Fadenreserve aufzunehmen, so daß die Fadenspannung stets erhalten bleibt. Zur Begrenzung der Frequenzänderung des Frequenzsignales in Abhängigkeit von der Anlauf- bzw. Auslaufcharakteristik des mit dem Fadenlieferelement gekuppelten Motors kann die Schaltungsanordnung der Regeleinrichtung in einer bevorzugten Ausführungsform einen Integrator für das von den Spannungsfühlmitteln abgegebene elektrische Signal aufweisen, dessen Zeitkonstante und damit die Dauer der Anlauf- bzw. der Auslaufphase des Motors derart bemessen ist, daß der Motor der Frequenzänderung stets zu folgen vermag, ohne außer Tritt zu fallen. Da während der Beschleunigung des Motors dem antreibenden Drehmoment nicht nur das Massenträgheitsmoment, sondern auch das Reibungsdrehmoment entgegenwirken, während bei der Verzögerung des Motors das Reibungsdrehmoment bremsend wirkt, ist es zweckmäßig, wenn der dem Anlauf des Motors zugeordnete Integrator eine größere Zeitkonstante aufweist als der dem Auslauf des Motors zugeordnete Integrator. In einer einfachen, praktischen Ausführungsform kann dies dadurch erreicht werden, daß die beiden Integratoren durch ein RC-Glied gebildet sind, dessen Ohmscher Widerstand signalabhängig auf zwei verschiedene Werte umschaltbar ist.

Die Einrichtung zur Bildung der Fadenreserve weist mit Vorteil ein auf einem vorbestimmten Weg beweglich gelagertes Fadenführelement auf, dem wenigstens ein feststehendes Fadenleitelement zugeordnet ist, das mit dem beweglichen Fadenführelement einen verlängerten Fadenlaufweg ausbildet, wobei das bewegliche Fadenführelement mit einer entgegen der an ihm angreifenden Fadenzugkraft wirkenden, einstellbaren Sollwert-Kraft beaufschlagt und mit einem Signalgeber der Fühlmittel gekuppelt ist, der als für die Fadenspannung kennzeichnendes Signal ein von der Stellung des beweglichen Fadenführelementes abhängiges Signal erzeugt.

Die Stellungsabtastung des beweglichen Fadenführelementes kann in apparativ sehr einfacher Weise durchgeführt werden. In einer bevorzugten Ausführungsform ist der Signalgeber ein das bewegliche Fadenführelement oder einen mit diesem verbundenen Teil abtastender elektro-optischer Signalgeber, der deshalb für diesen Zweck sehr gut geeignet ist, weil er keinerlei Kräfte auf das bewegliche Fadenführelement ausübt, die zu einer Beeinflussung der Regelgenauigkeit führen könnten.

Dabei kann das von dem Signalgeber erzeugte Signal in einer vorgegebenen funktionellen Abhängigkeit von der jeweiligen Stellung des beweglichen Fadenführelementes stehen, derart, daß mit zunehmender Auslenkung des Fadenführelementes im Sinne zunehmender Fadenspannung das Signal nur unterproportional zunimmt, so daß auch der Auslenkweg des beweglichen Fadenführelementes nicht über die Gebühr ansteigt.

Das von dem Signalgeber abgegebene Signal ist somit nicht nur für eine Änderung der Fadenspannung kennzeichnend, sondern auch für die Stellung des Fadenführelementes und damit für die Größe der Fadenreserve. Von ihm wird in der Regeleinrichtung das Stellsignal für den mit dem Fadenlieferelement gekuppelten Motor abgeleitet, das die Drehzahl des Motors und damit die Fadenliefergeschwindigkeit so beeinflußt, daß zum einen die Fadenspannung auf dem jeweils vorgegebenen Sollwert gehalten und zum anderen die Größe der Fadenreserve – durch die Stellung des Fadenführelementes – bei einer Auslenkung des Fadenführelementes stets auf einen (von der Fadenlaufgeschwindigkeit abhängigen) Ausgangswert zurückgeführt wird.

Die das bewegliche Fadenführelement beaufschlagende Sollwert-Kraft kann an sich bspw. durch eine Sollwert-Feder aufgebracht werden, die eine mehr oder minder steile Federkennlinie aufweist. Als zweckmäßig hat es sich aber erwiesen, wenn diese Sollwert-Kraft im wesentlichen wegunabhängig konstant ist. Dazu kann das bewegliche Fadenführelement mit einem die Sollwert-Kraft erzeugenden elektromagnetischen Sollwert-Geber gekuppelt sein, dessen Regelstrom einstellbar ist. Ein solcher elektromagnetischer Sollwert-Geber ist bspw. ein permanent erregter Gleichstrommotor oder eine dem Meßwerk eines Drehspulmeßinstrumentes oder dergl. vergleichbare Anordnung. Für einen solchen ein Soll-Drehmoment erzeugenden Sollwert-Geber ergeben sich besonders einfache Verhältnisse, wenn das bewegliche Fadenführelement ein schwenkbar gelagerter, ein Fadenleitorgan tragender Fadenführhebel ist, der mit der Achse des Sollwert-Gebers starr gekuppelt ist. Ein elektromagnetischer Sollwert-Geber hat den Vorteil, daß die Sollwert-Kraft in sehr einfacher Weise auf elektrischem Wege eingestellt werden kann.

Ohne daß damit ein größerer schaltungstechnischer Aufwand verbunden wäre, kann der elektromagnetische Sollwert-Geber mit der Regeleinrichtung verbunden sein, die bei Auftreten einer Änderung des von dem Signalgeber abgegebenen elektrischen Signals zeitweilig ihm ein die Sollwert-Kraft in einem der Änderung der Fadenspannung entgegenwirkenden Sinne beeinflussendes Kompensations-Signal aufschaltet. Auf diese Weise wird erreicht, daß das bewegliche Fadenführelement bei plötzlich zu- oder abnehmendem Fadenverbrauch an einer zu weiten Auslenkung gehindert bzw. sehr schnell wieder in seine Soll-Stellung zurückgeführt wird, so daß sich sehr kurze Regelzeiten ergeben. Dabei ist es zweckmäßig, wenn das Kompensations-Signal über ein Differenzierglied von dem von dem Signalgeber abgegebenen Signal abgeleitet wird.

Im übrigen kann der elektromagnetische Sollwert-Geber auch einen Eingang für von einem zentralen Geber kommende, die Sollwert-Kraft verstellende Signale aufweisen, so daß eine Ferneinstellung der Spannung des von der Fadenliefervorrichtung gelieferten Fadens möglich ist. Insbesondere bei mehrsystemigen Rundstrickmaschinen eröffnet sich damit die Möglichkeit, von einer zentralen Stelle aus – auch während des Maschinenlaufs – ohne Aufwand die Fadenspannungen in einzelnen Stricksystemen zweckentsprechend kurzfristig einstellen zu können oder programmgemäß zu verändern.

Schließlich ist es von Vorteil, wenn der Bewegungsweg des beweglichen Fadenführungselementes begrenzt ist, wobei in der Nähe der Grenzen mit dem Fadenführelement zusammenwirkende Fühler angeordnet sind, die jeweils ein Abschaltsignal für den Motor und/oder die Maschine abgeben. Damit erübrigen sich eigene Auslaufabsteller, deren Aufgabe darin besteht, nach Auftreten eines Fadenbruches die Maschine stillzusetzen. Es kann auch an der einen Grenze des Bewegungsweges des beweglichen Fadenführelementes lediglich der Motor und damit das Fadenlieferelement stillgesetzt werden; dadurch wird eine Ansteuerung der Fadenliefervorrichtung über die von dem Fadenverbraucher aufgenommene Fadenmenge erreicht. Nimmt der Verbraucher keinen Faden mehr ab, so wandert das Fadenführelement an eine Grenze seines Bewegungsweges; von dem zugeordneten Fühler wird ein Abschaltsignal für den Motor abgegeben, womit die Fadenlieferung unterbrochen wird. Die bis zum Stillstand des Motors gelieferte überschüssige Fadenmenge wird, wie bereits eingangs erläutert, in die Fadenreserve aufgenommen, ohne daß die Fadenspannung zusammenbricht.

Im Normalbetrieb einer Strickmaschine ist es erwünscht, daß den einzelnen Strickstellen eine genau vorgegebene, von der Drehzahl der Maschine abhängige Fadenmenge zugeliefert wird. Um dies zu erreichen, kann die Regeleinrichtung einen Eingang für ein von einer äußeren Synchronisationsquelle – bspw. einem Drehzahlgeber der Rundstrickmaschine – kommendes Synchronisationssignal aufweisen und der Motor nach Erreichen einer der eingestellten Sollwert-Fadenspannung entsprechenden Drehzahl durch die Regeleinrichtung selbsttätig mit dem Synchronisationssignal synchronisierbar sein.

Der Antriebsmotor des Fadenlieferelementes ist frequenzgeregelt; er kann ein Synchronmotor oder insbesondere aber ein Schrittmotor sein.

In der praktischen Ausgestaltung der neuen Fadenliefervorrichtung ist es vorteilhaft, wenn der mit dem beweglichen Fadenführelement gekoppelte Signalgeber ein analoges Signal abgibt und die Regeleinrichtung einen der dieses analoge Signal verarbeitenden Schaltungsanordnung nachgeschalteten Spannungs-/Frequenzwandler aufweist, der das Frequenzsignal erzeugt. Dabei kann zwischen dem Integrator und dem Spannungs-/Frequenzwandler eine Schwellwertschaltung für die übertragene Signalspannung angeordnet sein, die verhindert, daß unterhalb einem unteren Schwellwert liegende Spannungen zu dem Eingang des Spannungs-/Frequenzwandlers gelangen. Auch weist der Spannungsfrequenzwandler ausgangsseitig mit Vorteil eine einstellbare Nullpunktsunterdrückung auf, derart, daß die Ausgangsfrequenz auf die Start-/Stop-Frequenz des jeweiligen Motors abgestimmt ist. Um die einer bestimmten Fadenlaufgeschwindigkeit zugeordnete Stellung des Fadenführelementes und damit die Größe der Fadenreserve beeinflussen zu können, ist schließlich der Spannungs-/Frequenzwandler zweckmäßigerweise mit einer Einrichtung mit Änderung seiner Steilheit versehen.

Bei stillgesetztem Motor ist die Fadenspannung mit Vorteil durch die Regeleinrichtung auf einem vorbestimmten Wert gehalten, der gleich oder kleiner dem eingestellten Sollwert ist. Um zu vermeiden, daß bei auf einen höheren Wert eingestellter Fadenspannung die von dem Faden im Ruhezustand ausgeübte Zugkraft zu einer Beeinträchtigung des Gestrickes oder dazu führt, daß der bspw. in der Fadenklemme eines Ringelapparates festgeklemmte Faden freikommt, ist es zweckmäßig, wenn die Regeleinrichtung Mittel aufweist, durch die der Sollwert der Fadenspannung bei gegenüber der Ausgangsgröße in vorgegebenem Maße größer gewordener Fadenreserve auf einen vorbestimmten kleineren Wert absenkbar und bei sich wieder verkleinernder Fadenreserve auf seinen ursprünglichen Wert rückstellbar ist.

Das Fadenlieferelement ist in einer Ausführungsform der Fadenliefervorrichtung ein Fadenrad oder eine Fadentrommel, das bzw. die von dem Faden umschlungen ist und durch das bzw. die der Faden im wesentlichen schlupflos förderbar ist. Die Erfindung ist aber in gleicher Weise auch auf Fadenliefervorrichtungen anwendbar, bei denen das Fadenlieferelement wenigstens eine mit dem Umfang einer Fadenabzugsspule oder eines Fadenwickelkörpers reibschlüssig kuppelbare, zylindrische Antriebswalze aufweist. Solche Fadenliefervorrichtungen, bei denen eine Fadenabzugsspule durch reibschlüssige Kupplung ihres Umfanges mit einer Antriebswalze an ihrem Umfang selbst angetrieben wird, sind insbesondere für hochelastische Fäden und Garne erforderlich.

Weitere alternative Ausgestaltungen der neuen Fadenliefervorrichtung sind Gegenstand von Unteransprüchen.

In der Zeichnung sind Ausführungsbeispiele des Gegenstandes der Erfindung dargestellt. Es zeigen:

Fig. 1 eine Fadenliefervorrichtung gemäß der Erfindung, in perspektivischer schematischer Darstellung,

Fig. 2 die Fadenliefervorrichtung nach Fig. 1, geschnitten längs der Linie II–II der Fig. 1, in einer Seitenansicht, mit weggelassener eingangsseitiger Fadenbremse,

Fig. 3 die Fadenliefervorrichtung nach Fig. 1, in einer abgewandelten Ausführungsform, in einer Schnittdarstellung ähnlich Fig. 2, sowie im Ausschnitt,

Fig. 4 die Fadenliefervorrichtung nach Fig. 1, in einer weiteren abgewandelten Ausführungsform, in einer Schnittdarstellung ähnlich Fig. 2 und im Ausschnitt,

Fig. 5 ein Diagramm zur Veranschaulichung der Anlaufkennlinie des Motors und des Fadenrades der Fadenliefervorrichtung nach Fig. 1,

Fig. 6 ein Diagramm zur Veranschaulichung der Auslaufkennlinie des Motors und des Fadenrades der Fadenliefervorrichtung nach Fig. 1,

Fig. 7 ein schematisches Blockschaltbild der elektronischen Einrichtungen der Fadenliefervorrichtung nach Fig. 1,

Fig. 8 ein vereinfachtes Schaltbild der Schaltung zu dem Blockschaltbild nach Fig. 7,

Fig. 9 ein Diagramm zur Veranschaulichung des funktionellen Zusammenhanges zwischen dem Stellwinkel des Fadenführarmes und der von dem elektrooptischen Signalgeber angegebenen Signalspannung bei der Fadenliefervorrichtung nach Fig. 1,

Fig. 10 ein Blockschaltbild ähnlich Fig. 7 einer mit einer äußeren Synchronisationsquelle synchronisierbaren Fadenliefervorrichtung nach Fig. 1,

Fig. 11 ein Schaltbild eines zur Fadenspannungsabsenkung dienden Schaltungsteiles für die Schaltung nach Fig. 8,

Fig. 12 den Fadenführarm der Fadenliefervorrichtung nach Fig. 1, in einer schematischen Draufsicht unter Veranschaulichung der verschiedenen Bereiche innerhalb des Bewegungsweges dieses Fadenführarmes,

Fig. 13 eine Fadenliefervorrichtung gemäß der Erfindung in einer anderen Ausführungsform, insbesondere zum Abspulen von hochelastischen Fäden oder Garnen in einer schematischen perspektivischen Darstellung,

Fig. 14 die Fadenliefervorrichtung nach Fig. 13 in einer abgewandelten Ausführungsform und in einer schematischen perspektivischen Darstellung,

Fig. 15 die Fadenliefervorrichtung nach Fig. 13 im axialen Schnitt, in einer Seitenansicht und in einem anderen Maßstab sowie in schematischer Darstellung und

Fig. 16 die Fadenliefervorrichtung nach Fig. 13 oder 14 im axialen Schnitt, in einer Seitenansicht unter schematischer Veranschaulichung einer Ausführungsform des Antriebs der Antriebswalzen.

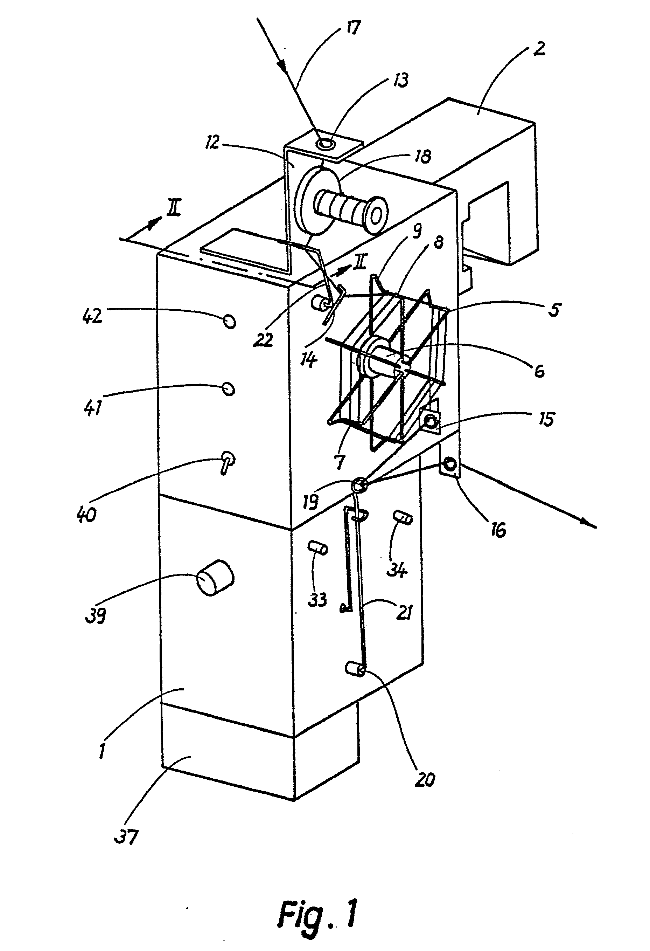

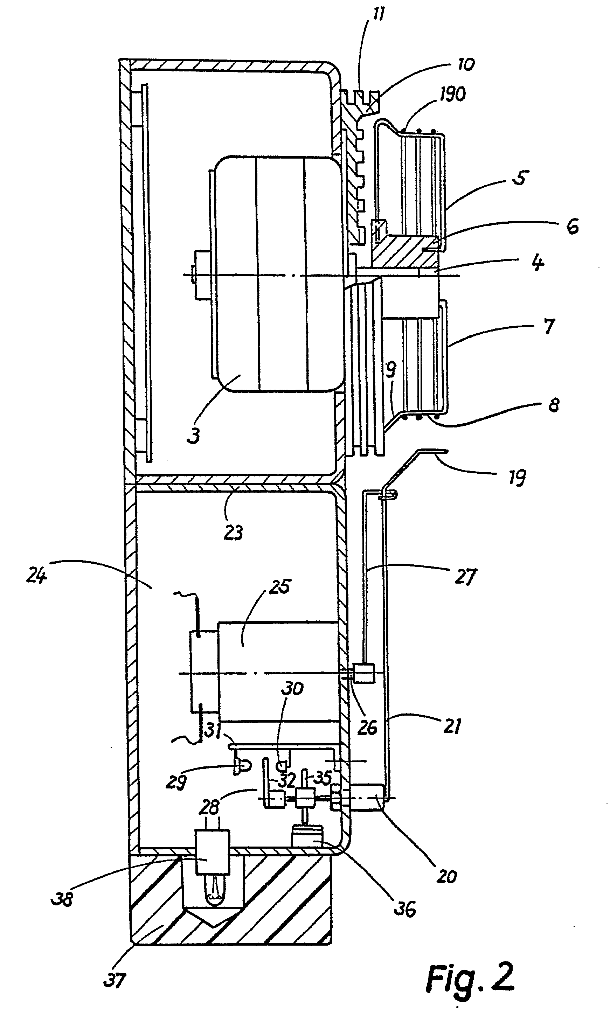

Die in Fig. 1 schematisch dargestellte Fadenliefervorrichtung weist ein Gehäuse 1 auf, das einen Halter 2 trägt, der zur Befestigung an dem Gestellring einer nicht weiter dargestellten Rundstrickmaschine eingerichtet ist und in dessen Bereich ebenfalls nicht weiter veranschaulichte elektrische Anschlußeinrichtungen für die im Inneren des Gehäuses 1 untergebrachten elektrischen und elektronischen Bauelemente angeordnet sind. Wie aus Fig. 2 zu ersehen, ist in dem oberen Teil des Gehäuses 1 ein elektrischer Schrittmotor 3 angeordnet, der mit seiner Welle 4 durch eine entsprechende Öffnung in der Gehäusevorderwand ragt und ein auf die Welle 4 drehfest aufgesetztes Fadenrad 5 antreibt. Das Fadenrad 5 besteht aus einer auf die Welle 4 aufgesetzten Nabe 6 und einer Anzahl mit der Nabe 6 endseitig verbundener, im wesentlichen U-förmiger Drahtbügel 7, von denen jeder ein im wesentlichen achsparalleles Fadenauflageteil 8 und eine daran anschließende Einlaufschräge 9 aufweist. Zur guten Wärmeabfuhr aus dem Gehäuse ist der Schrittmotor 3 mit seinem Lagerschild an einem aus Leichtmetall bestehenden plattenartigen Kühlkörper 10 befestigt, der seinerseits auf die Außenseite der Vorderwand des Gehäuses 1 aufgeschraubt ist und sich im wesentlichen hinter dem Fadenrad 5 erstreckt. Der Kühlkörper 10 trägt angeformte Kühlrippen 11, die die der Wärmeabgabe an die Umgebungsluft dienende Oberfläche vergrößern.

Dem das Fadenlieferelement bildenden Fadenrad 5 sind an dem Gehäuse 1 angeordnete ortsfeste Fadenleitelemente zugeordnet, die aus einer an einem gehäusefesten Halter 12 vorgesehenen Einlauföse 13, einem an der Gehäusevorderwand in der Nähe des Fadenrades 5 angeordneten Faden-Umlenkhaken 14 und zwei auf der Fadenauslaufseite des Fadenrades 5 an dem Gehäuse angeordneten Fadenösen 15, 16 bestehen.

Der von einer nicht weiter dargestellten Fadenquelle, bspw. einer Spule, kommende Faden 17 läuft durch die Einlauföse 13 über eine an dem Halter 12 angeordnete einstellbare Faden-Tellerbremse 18 und den Umlenkhaken 14 auf die Fadentrommel 5 im Bereiche der Anlaufschräge 9 der Drahtbügel 7 auf, die die sich bildenden Fadenwindungen auf die Fadenauflageteile 8 der Drahtbügel 7 schieben, auf welchen sich somit ein aus einer Anzahl Fadenwindungen 190 (Fig. 2) bestehender Speicherwickel bildet, der zusammen mit den schmalen Auflagebereichen 8 eine im wesentlichen schlupflose Mitnahme des Fadens 17 am Umfang des Fadenrades 5 gewährleistet.

Von dem Speicherwickel 190 aus läuft der Faden 17 durch die erste ortsfeste auslaufseitige Fadenöse 15, von dort durch eine Fadenöse 19 am Ende eines ein bewegliches Fadenfühlelement bildenden, anderenends bei 20 an dem Gehäuse 1 schwenkbar gelagerten Fadenführarmes 21 und von da zurück zu der zweiten ortsfesten Fadenöse 16, die etwas unterhalb, aber seitlich in unmittelbarer Nähe der ersten Fadenöse 15 angeordnet ist.

Von der zweiten Fadenöse 16 aus geht der Faden zu einem nicht weiter dargestellten Fadenverbraucher, bei einer Strickmaschine zu den Nadeln einer Strickstelle.

Auf der Einlaufseite wird der Faden 17 in dem Bereich zwischen der Fadenbremse 18 und dem Umlenkhaken 14 von einem Fadeneinlauffühler 22 überwacht, der bei Fadenbruch einen von seinem Fühlerarm betätigten, im dem Gehäuse 1 angeordneten Schalter umschaltet, der sodann ein die Stillsetzung der Maschine bewirkendes elektrisches Abschaltsignal abgibt.

Auf der Ausgangsseite des Fadenrades 5 bildet der schwenkbar gelagerte Fadenführarm 21 mit seiner Fadenöse 19 zwischen den feststehenden Fadenösen 15, 16 einen im wesentlichen V-förmigen verlängerten Fadenlaufweg aus, der eine Fadenreserve darstellt, deren Größe von der Winkelstellung des Fadenführarmes 21 abhängt.

Aus Fig. 2 ist zu entnehmen, daß in einem durch eine Trennwand 23 abgeteilten unteren Gehäuseteil 24 an der Gehäusevorderwand ein kleiner Gleichstrommotor 25 befestigt ist, der mit seiner Welle 26 durch eine entsprechende Öffnung der Gehäusevorderwand ragt und einen drehfest aufgesetzten, im wesentlichen L-förmigen Betätigungshebel 27 trägt, welcher sich an seinem Ende einseitig gegen den Fadenführarm 21 abstützt und damit diesen, bezogen auf Fig. 1, im Gegenuhrzeigersinn zu verschwenken bestrebt ist.

Der vorzugsweise als sogenannter Glockenläufer-Motor ausgebildete, permanent erregte Gleichstrommotor 25 kann wegen das beschränkten Drehwinkelbereiches des mit ihm gekuppelten Fadenführarmes 21 auch durch eine Anordnung ähnlich dem Meßwerk eines Drehspulmeßinstrumentes etc. ersetzt sein; er bildet einen elektromagnetischen Sollwert-Geber, der über den Betätigungsarm 27 eine genau vorgegebene einstellbare Sollwert-Kraft auf den Fadenführarm 21 und dessen Öse 19 ausübt. Diese Sollwert-Kraft ist der von dem durch die Öse 19 geführten Faden ausgeübten, von der Fadenspannung abhängigen Zugkraft entgegengerichtet, d.h., bezogen auf Fig.1, weist die Sollwert-Kraft nach links.

Mit der Achse 20 des Fadenführarmes 21 ist ein elektro-optischer Signalgeber 28 gekuppelt, der die Winkelstellung des Fadenführarmes 21 abtastet und – wie noch im einzelnen erläutert werden wird – ein für die Spannung des durch die Fadenöse 19 des Fadenführarmes 21 verlaufenden Fadens 17 kennzeichnendes Signal abgibt, das gleichzeitig auch für die Winkelstellung des Fadenführarmes 21 und damit die Größe der oben erwähnten Fadenreserve kennzeichnend ist.

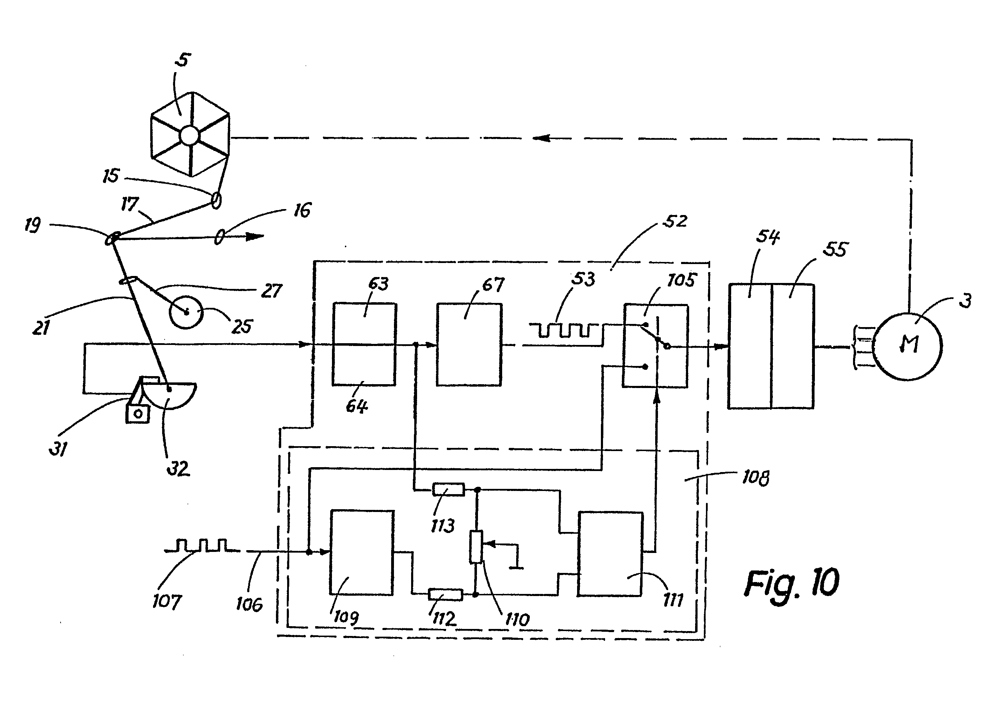

Der Signalgeber 28 besteht aus einer Leuchtdiode 29 und einem im Strahlenweg der Leuchtdiode 29 liegenden Fototransistor 30, die beide an einem gehäusefesten Halter 31 sitzen. In den Strahlengang der Leuchtdiode 29 ragt mehr oder minder mit ihrer Berandung eine auf die Achse 20 des Fadenführarmes 21 aufgekeilte Abblendscheibe 32, deren Berandung grundsätzlich die in Fig. 9 dargestellte Gestalt aufweist, die im wesentlichen einer e-Funktion folgt.

Abhängig von der Verschwenkung des Fadenführarms 21 wird durch die Abblendscheibe 32 der Fototransistor 30 mehr oder weniger gegen die Leuchtdiode 29 abgeschirmt, so daß am Ausgang des Fototransistors 30 ein analoges Signal erscheint, das in einer durch den Umriß der Abblendscheibe 32 gegebenen festen funktionellen Abhängigkeit von der Winkelstellung des Fadenführarmes 21 steht.

Die Schwenkbewegung des Fadenführarmes 21 ist in beiden Drehrichtungen durch zwei Anschlagstifte 33, 34 (Fig. 1) begrenzt. Erfolgt keine Fadenabnahme, so befindet sich der Fadenführarm 21 in der Nähe des linken Anschlags 33; er bewegt sich mit steigender Fadenlaufgeschwindigkeit, d.h. zunehmender Drehzahl des Fadenrades 5, nach rechts auf den anderen Anschlagstift 34 zu, ohne diesen im Normalbetrieb erreichen zu können. An dem Anschlagstift 33 oder dem Anschlagstift 34 kommt der Fadenführarm 21 lediglich im Störfall zur Anlage:

Wenn ein Fadenbruch auftritt oder aus einem anderen Grunde die Spannung des von dem Fadenrad 5 ablaufenden Faden zusammenbricht, wird der Fadenführarm 21 zu dem linken Anschlagstift 33 verschwenkt und durch diesen stillgesetzt; wenn andererseits, bspw. durch einen in dem Faden 17 enthaltenen Knoten, der die Fadenöse 19 nicht passieren kann, der Fadenführarm 21, bezogen auf Fig. 1, nach rechts gerissen wird, wird seine Bewegung durch den rechten Anschlagstift 34 begrenzt.

Auf der Achse 20 des Fadenführarmes 21 ist in dem unteren Gehäuseteil 24 ein Schaltexzenter 35 drehfest angeordnet, der mit einem in dem Gehäuse 1 untergebrachten Schalter 36 derart zusammenwirkt, daß über entsprechende Schaltnocken des Schaltexzenters 35 der somit einen Stellungsfühler bildende Schalter 36 betätigt wird und ein Abschaltsignal für die Maschine abgibt, bevor der Fadenführarm 21 an dem linken oder rechten Anschlagstift 33 bzw. 34 zur Anlage kommt. Eine in einem farbigen Leuchtenteil 37 an der Unterseite des Gehäuses 1 angeordnete Signalleuchte 38 leuchtet auf, wenn entweder der Einlauffadenfühler 22 anspricht, oder der Schalter 36 betätigt wird und demgemäß ein Abschaltsignal für die Maschine abgegeben wurde. Auf diese Weise ist eine schnelle Lokalisierung der Fehlerstelle an der Rundstrickmaschine möglich.

In dem Gehäuse 1 ist ein von außen her betätigbares Potentiometer 39 (Fig. 1) angeordnet, das in einer im einzelnen noch zu erläuternden Steuerschaltung des Gleichstrommotors 25 liegt, und es gestattet, die von diesem auf den Fadenführarm 21 ausgeübte Sollwert-Kraft, und damit die Fadenspannung, zu verstellen. Außerdem ist oberhalb des Potentiometers 39 in dem Gehäuse 1 ein Hauptschalter 40 vorgesehen, der es gestattet, die Gesamtstromversorgung der Fadenliefervorrichtung ein- und auszuschalten, derart, daß im ausgeschalteten Zustand das ganze Gerät stromlos ist, wobei dann auch kein Maschinenstoppsignal von dem Schalter 36 oder dem Einlauffühler 22 mehr abgegeben wird. Eine Anzeigeleuchte 41 zeigt bei eingelegtem Hauptschalter 40 die Betriebsbereitschaft der Fadenliefervorrichtung an, während ein in der gleichen Gehäusewand vorgesehener Handtaster 42 ein Handspulen des Fadenrades 5 oder ein automatisches Aufspulen von einer genauen Anzahl von Fadenwindungen des Speicherwickels 190 erlaubt.

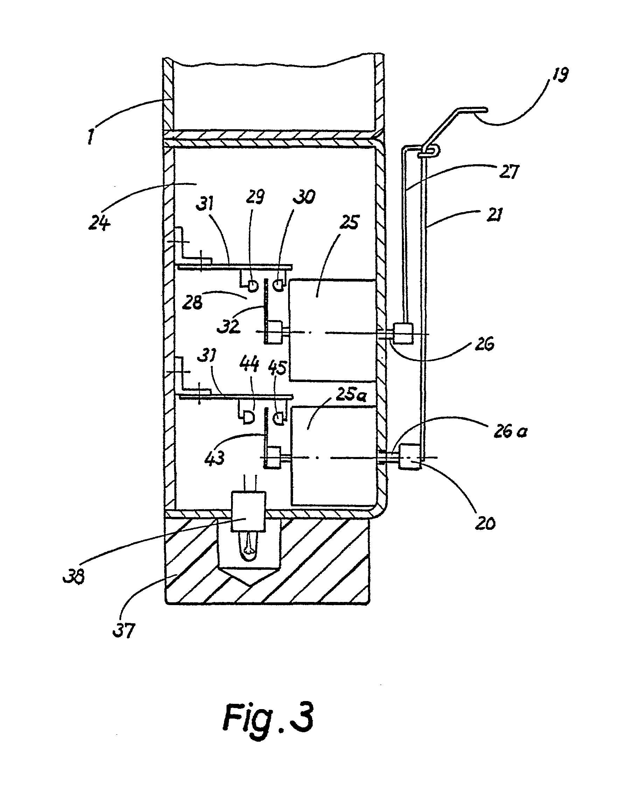

Die Ausführungsform nach Fig. 3 unterscheidet sich von der im Vorstehenden anhand der Fig. 1, 2 erläuterten Ausführungsform lediglich dadurch, daß sowohl der Betätigungsarm 27 als auch der Fadenführarm 21 jeweils mit einem permanent erregten Gleichspannungsmotor 25 bzw. 25a oder einem anderen gleichwirkenden elektromagnetischen Sollwert-Geber gekuppelt ist, so daß die der an der Fadenöse 19 angreifenden Fadenzugkraft entgegenwirkende Sollwert-Kraft von diesen beiden Gleichstrommotoren 25, 25a aufgebracht wird. Dies hat für bestimmte Anwendungsfälle den Vorteil, daß anstelle eines verhältnismäßig großen Motors lediglich zwei kleinere Motoren zum Einsatz kommen können. Der Signalgeber 28 sitzt wiederum auf der Welle 26 des mit dem Betätigungsarm 27 gekuppelten Gleichstrommotors 25; sein Aufbau wurde bereits anhand der Fig. 2 erläutert, gleiche Teile sind mit gleichen Bezugszeichen versehen. Anstelle des Schaltexzenters 35 und des Schalters 36 der Fig. 2 ist in diesem Falle dem Fadenführarm 21 ein berührungsloser Grenzlagenfühler zugeordnet, der aus einer entsprechend gestalteten, auf die Welle 26a aufgesetzten Abblendscheibe 43 und einer Lichtschranke 44 besteht, in deren Strahlengang die Abblendscheibe 43, abhängig von der Winkelstellung des Fadenführarmes 21, mehr oder weniger eintaucht. Der Fototransistor 45 der Lichtschranke 44 gibt Abschaltsignale ab, sowie der Fadenführarm 21 Grenzstellungen in der Nähe der beiden Anschlagstifte 33, 34 erreicht.

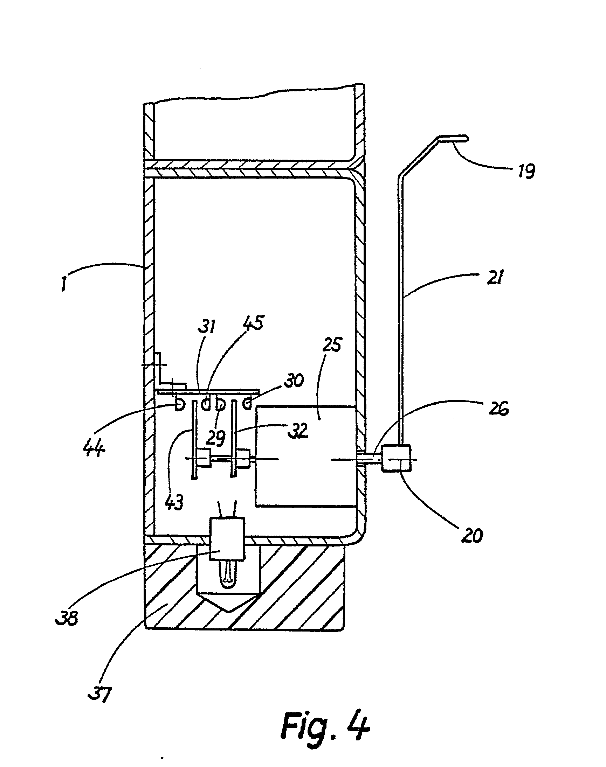

Auch die Ausführungsform nach Fig. 4 entspricht im wesentlichen jener nach den Fig. 1, 2, mit dem Unterschied jedoch, daß anstelle des Schaltexzenters 35 und des Schalters 36 der berührungslose elektro-optische Grenzwertfühler 43–45 der Ausführungsform nach Fig. 3 vorgesehen ist, dessen Abblendscheibe 43 unmittelbar mit der Welle 26 des mit dem Fadenführarm 21 unmittelbar gekuppelten Gleichstrommotors 25 verbunden ist. Auf den Betätigungsarm 27 ist hierbei verzichtet.

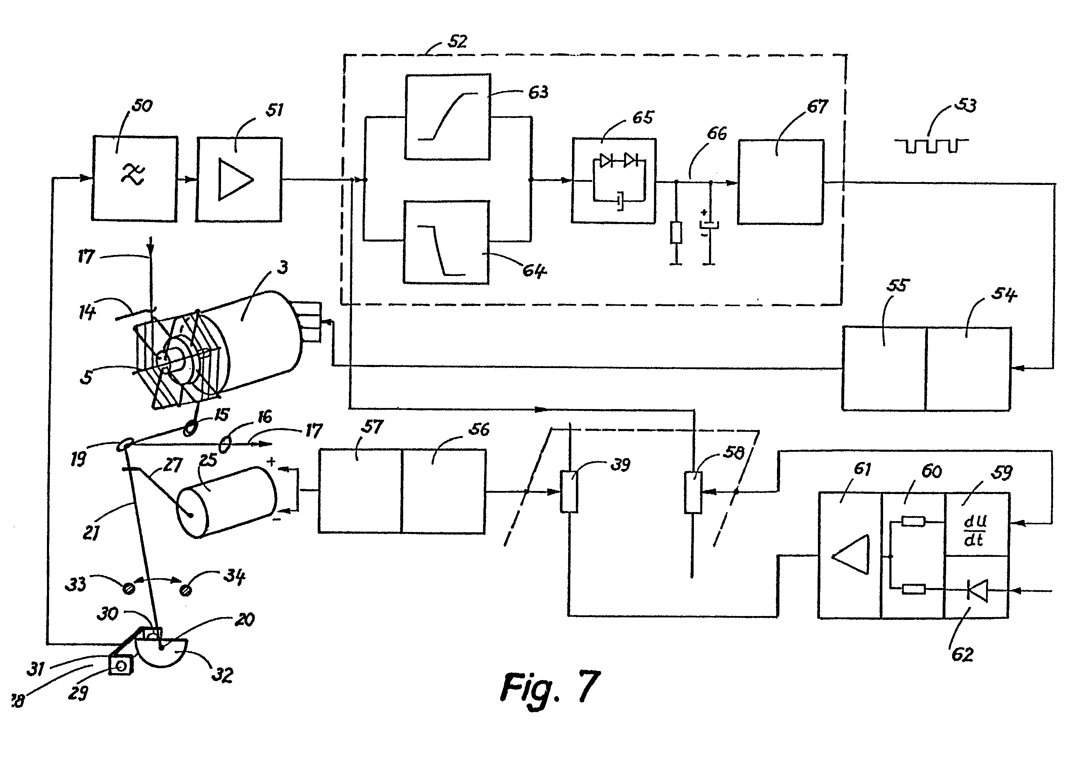

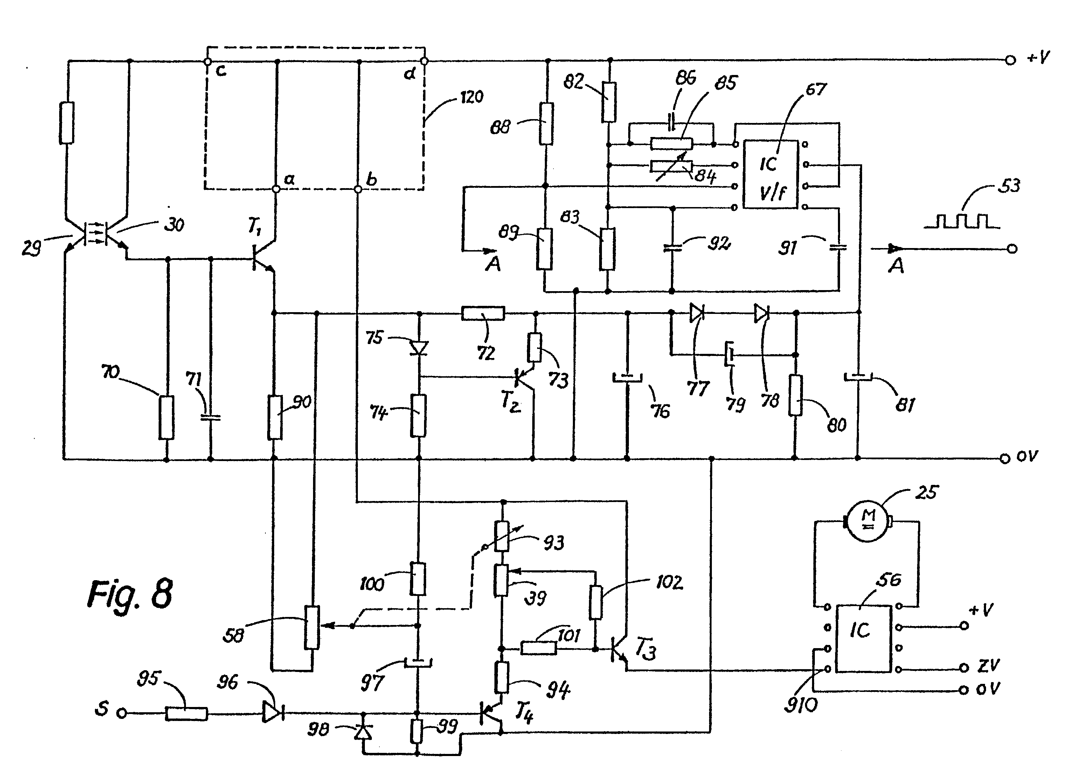

Die elektrische Schaltung für den das Fadenrad 5 antreibenden Schrittmotor 3 und den als Sollwert-Geber dienenden Gleichstrommotor 25 ist in den Fig. 7, 8 veranschaulicht:

Wie aus dem Blockschaltbild (Fig. 7) zu entnehmen, wird das von dem Fototransistor 30 des Signalgebers 28 abgegebene Analogsignal, das für die Winkelstellung des Fadenführarmes 21 – und damit die Größe der Fadenreserve – sowie für die Spannung des die Fadenreserve durchlaufenden Fadens 17 kennzeichnend ist, über ein Tiefpaßfilter 50 und einen Spannungsfolger 51 in eine Regeleinrichtung 52 eingespeist, die das Signal verarbeitet und ausgangsseitig ein Frequenzsignal einer bestimmten Impulsfolgefrequenz erzeugt, das bei 53 angedeutet ist und einer Steuerelektronik 54 zugeleitet wird, die über eine nachgeschaltete Leistungsendstufe 55 dem Schrittmotor 3 ein Stellsignal in Gestalt einer entsprechenden Schrittimpulsfolge zuleitet. Das Tiefpaßfilter 50 filtert aus dem von dem Signalgeber 28 kommenden Analogsignal höherfrequente Störsignale aus, die bspw. von mechanischen Vibrationen des Fadenführarms 21 etc. herrühren. Der Spannungsfolger 51 liefert ausgangsseitig mit verhältnismäßig niedriger Ausgangsimpedanz ein Signal-Spannungspotential, das von der jeweiligen Winkelstellung $\alpha$ des Fadenführarmes 21 abhängig ist. Die durch die spezielle Gestaltung der Abblendscheibe 32 gegebene funktionelle Abhängigkeit des dem Eingang der Regeleinrichtung 52 zugeführten Signal-Spannungspotentials U von der Winkelstellung des Fadenführarmes 21 ist in Fig. 9 veranschaulicht; sie folgt, wie bereits vermerkt, etwa einer e-Funktion; die Kennlinie ist deshalb progressiv gestaltet, um zu erreichen, daß bei zunehmender Fadenliefermenge pro Zeiteinheit der erforderliche Stellwinkelbereich des Fadenführarmes 21 nicht über Gebühr ansteigt.

Der als Sollwert-Geber dienende permanent erregte Gleichstrommotor 25 wird von einer Konstantstromquelle 56 aus über eine Leistungsendstufe 57 mit konstantem Strom versorgt, so daß er an seiner Welle 26, unabhängig von der Winkelstellung des Betätigungsarmes 27, ein konstantes Drehmoment abgibt. Die Größe dieses Drehmomentes und damit der Sollwert der Fadenspannung können durch das bereits erwähnte Potentiometer 39 eingestellt werden.

Außerdem wird das von dem Spannungsfolger 51 abgegebene analoge Spannungssignal über ein mit dem Potentiometer 39 gekuppeltes zweites Potentiometer 58 einem Differenzglied 59 zugeleitet, wo es differenziert wird. Der Ausgang des Differenziergliedes 59 ist über ein Addierglied 60 und einen Spannungsfolger 61 mit dem Potentiometer 39, d.h. dem Stelleingang der Konstantstromquelle 56 verbunden. Auf diese Weise wird auf den Stelleingang der Konstantstromquelle 56 ein Kompensationssignal aufgeschaltet, das insbesondere bei auf eine niedrige Fadenspannung (kleiner ca. 3 p ) eingestelltem Fadenspannungs-Sollwert wirksam wird und das von dem Gleichstrommotor 25 auf den Betätigungsarm 27 ausgeübte Drehmoment bei Auftreten einer abrupten Regelabweichung vorübergehend im Sinne der Rückführung des Fadenführarmes 21 in die Soll-Winkelstellung beeinflußt.

Über ein Trennglied 62 und das Addierglied 60 sowie den Spannungsfolger 61 kann schließlich noch von einer äußeren Signalquelle, bspw. einer zentralen Steuereinrichtung für alle oder eine bestimmte Anzahl von Fadenliefervorrichtungen einer Rundstrickmaschine, über das Potentiometer 39 dem Stelleingang der Konstantstromquelle 56 ein äußeres Stellsignal zugeleitet werden, das eine Ferneinstellung des Drehmoments des Gleichstrommotors 25 und damit der auf den Fadenführarm 21 ausgeübten Sollwert-Kraft gestattet.

Im stationären Betrieb treibt der Schrittmotor 3 das Fadenrad 5 mit einer durch das Frequenzsignal 53 bestimmten Drehzahl an, so daß der Faden 17 mit einer entsprechenden Geschwindigkeit dem Verbraucher zugeliefert wird. Der Fadenführarm 21 steht in einer bestimmten Winkelstellung zwischen den beiden Anschlagstiften 33, 34; die auf ihn über die Fadenöse 19 von dem laufenden Faden 17 ausgeübte Kraft steht im Gleichgewicht mit der an ihm über den Betätigungshebel 27 angreifenden, von dem Gleichstrommotor 25 erzeugten Sollwert-Kraft.

Bei Auftreten einer Regelabweichung, bspw. nachlassendem Fadenverbrauch, beginnt der Fadenführarm 21 aus seiner Soll-Winkelstellung auszuwandern, so daß das der Regeleinrichtung 52 zugeführte analoge Spannungssignal U + ΔU eine entsprechende Änderung erfährt. Die Regeleinrichtung 52 regelt das Stellsignal 53 für den Schrittmotor 3 und damit die Fadenliefergeschwindigkeit entsprechend nach, bis wieder ein stationärer Zustand erreicht ist, bei dem der Fadenführarm 21 eine feste Winkelstellung einnimmt, in der die Fadenzugspannung mit der von dem Betätigungsarm 27 ausgeübten Sollwert-Kraft im Gleichgewicht steht. Da die Sollwert-Kraft, unabhängig von der Winkellage des Betätigungsarmes 27 und des Fadenführhebels 21, konstant ist, ist im stationären Zustand bei jeder Fadenliefergeschwindigkeit, und damit auch jedem Fadenverbrauch pro Zeiteinheit, innerhalb des Regelbereiches die Fadenspannung konstant.

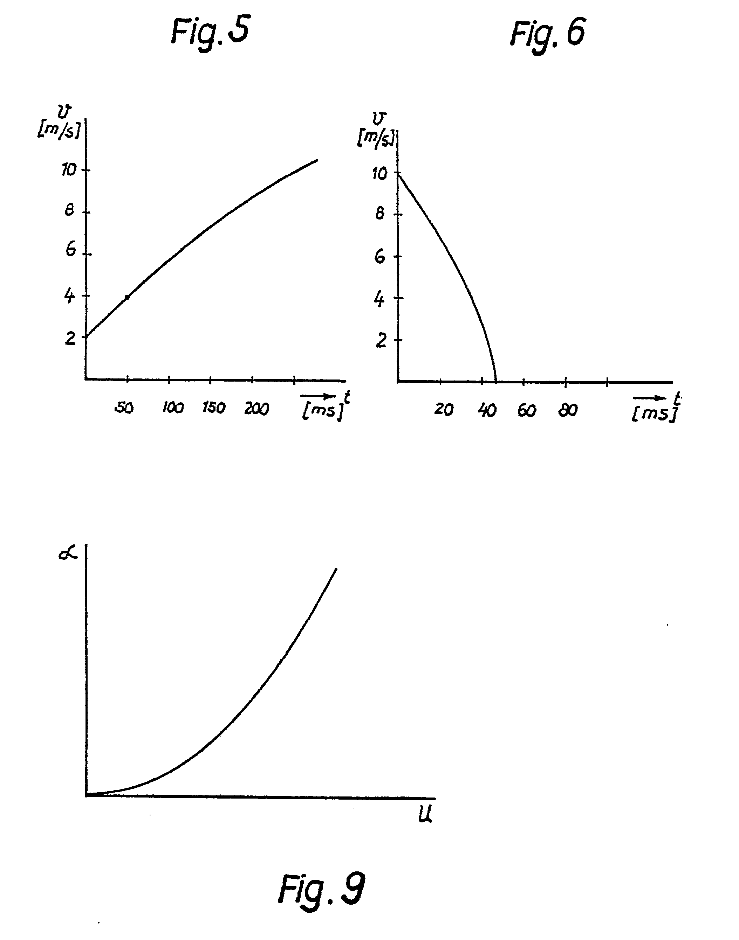

Beim Auftreten einer sehr raschen abrupten Änderung des Fadenverbrauches, wie sie bspw. bei einer im Ringelbetrieb arbeitenden Rundstrickmaschine auftritt, wenn der Ringelapparat einen Fadenwechsel vornimmt, ist der Schrittmotor 3 mit dem angekuppelten Fadenrad 5 und dem darüberlaufenden Faden 17 zu träge, um dem raschen Ablauf des Regelungsvorganges zu folgen. So muß bspw. bei dem erwähnten Ringelbetrieb beim Einlegen eines neuen Fadens der vorher stillstehende Faden innerhalb von Bruchteilen einer Millisekunde auf die normale Fadenfördermenge von ca. 4 m/sek. beschleunigt werden. Der Schrittmotor 3 kann aber nur innerhalb bestimmter Grenzen, die durch die Anlaufcharakteristik gegeben sind, einer Frequenzänderung (Frequenzerhöhung) des Stellsignales 53 folgen. Fig. 5 und 6 veranschaulichen die Anlauf- und die Auslaufcharakteristik des Schrittmotors 3 in einer typischen Ausführung der beschriebenen Fadenliefervorrichtung. Aus Fig. 5 ist zu entnehmen, daß der Schrittmotor 3 mindestens ca. 50 ms benötigt, um eine Umfangsgeschwindigkeit von 4 m/sek. an dem Fadenrad 5 zu erreichen. Bei einem Versuch, ihn schneller zu beschleunigen, würde er mit dem Frequenzsignal 53 außer Tritt fallen und stehenbleiben.

Da ein Schrittmotor bekanntlich eine bestimmte Start-/Stopp-Frequenz aufweist, geht die Kennlinie in Fig. 5 nicht durch den Nullpunkt.

Grundsätzlich Gleiches gilt auch für die Verhältnisse beim Stillsetzen der Fadenlieferung; auch dieser Vorgang kann nur innerhalb des unterhalb der in Fig. 6 dargestellten Auslaufcharakteristik liegenden Bereiches geschehen, ohne daß der Schrittmotor 3 mit dem Frequenzsignal 53 außer Tritt kommt.

Um zu vermeiden, daß wegen der geschilderten Trägheit der aus dem Schrittmotor 3 und dessen Steuerung bestehenden Einheit bei einer sehr schnellen Vergrößerung des Fadenverbrauchs, bspw. beim Einlegen eines Fadens in den Ringelapparat, die Fadenspannung auf der Ablaufseite des Fadenrades 3 unzulässig ansteigt oder der Faden sogar reißt, und daß andererseits bei einem plötzlichen Unterbrechen der Fadenabnahme das verhältnismäßig langsam mit dem Schrittmotor 3 auslaufende Fadenrad 5 überschüssigen Faden nachliefert, der zur Schlaufenbildung und zum Zusammenbruch der Fadenspannung und damit zur Betätigung des Maschinenstoppschalters 36 führt, sind folgende Maßnahmen vorgesehen:

Zwischen den feststehenden Fadenösen 15, 16 und der beweglichen Fadenöse 19 ist, wie bereits erläutert, eine Fadenreserve vorgesehen. Die Größe dieser Fadenreserve ist so bemessen, daß sie zur Deckung des Fadenbedarfes während der durch die Anlaufcharakteristik (Fig. 5) gegebenen Anlaufzeit des Schrittmotors 3 ausreicht. Diese Größe kann anhand der bekannten Anlaufcharakteristik und des ebenfalls bekannten Fadenbedarfes während der Anlaufphase einfach berechnet werden; durch entsprechende Wahl der Länge des Fadenführarms 21 und der Größe dessen Stellwinkelbereiches kann die Fadenliefervorrichtung darauf eingestellt werden.

Außerdem ist in der Regeleinrichtung 52 eine im wesentlichen aus zwei Integratoren 63, 64 bestehende Schaltungsanordnung vorgesehen, die eine auf die jeweilige Anlauf- bzw. Auslaufcharakteristik (Fig. 5, 6) des Schrittmotors 3 abgestimmte Zeitkonstante aufweist und damit die zeitliche Änderung der Frequenz des Frequenzsignales 53 während des Anlaufs bzw. des Auslaufs des Schrittmotors 3 derart begrenzt, daß der von dem Faden 17 und dem Fadenrad 5 etc. belastete Schrittmotor 3 der Frequenzänderung zu folgen vermag. Praktisch bedeutet dies, daß die Anlauf- und die Auslaufkurve des von dem Frequenzsignal 53 gesteuerten Schrittmotors 3 unterhalb der Anlauf- bzw. Auslaufcharakteristik nach Fig. 5 bzw. Fig. 6 liegen.

Damit wird erreicht, daß während der Anlaufzeit des Schrittmotors 3 der Fadenverbraucher seinen Fadenbedarf aus der Fadenreserve decken kann, wobei die Fadenspannung durch das stellwinkelunabhängige Sollwert-Drehmoment des Gleichstrommotors 25 immer auf ihrem Sollwert gehalten bleibt. Gleichzeitig kann während dieser Zeit der Schrittmotor 3 das Fadenrad 5 auf die der erforderlichen Fadenlaufgeschwindigkeit entsprechende Drehzahl innerhalb einer Zeit beschleunigen, deren Länge durch die Anlaufcharakteristik bestimmt ist und die gewährleistet, daß der Schrittmotor 3 mit dem Frequenzsignal 53 in Tritt bleibt.

Da der Signalgeber 28 die Winkelstellung des Fadenführarmes 21 abtastet, wird mit zunehmender Drehzahl des Schrittmotors 3 und damit zunehmender, von dem Fadenrad 5 gelieferter Fadenmenge pro Zeiteinheit der Fadenführarm 21 von dem Betätigungsarm 27 ebenfalls in zunehmendem Maße selbsttätig in eine Winkelstellung überführt, die dem stationären Zustand entspricht, bei dem von dem Fadenrad 5 gelieferte Fadenmenge genau dem Fadenverbrauch entspricht. Wenn dieser stationäre Zustand erreicht ist, steht der Fadenführarm 21 wieder in einer durch die jeweilige Fadenliefergeschwindigkeit bestimmten Zwischenstellung zwischen den Anschlagstiften 33, 34, d.h. die Fadenreserve ist wieder auf einen Ausgangswert aufgebaut.

Grundsätzlich Gleiches geschieht bei einer plötzlichen Unterbrechung der Fadenlieferung. In diesem Falle beginnt der Fadenverbrauch plötzlich nachzulassen; der Fadenführarm 21 wird von dem Betätigungsarm 27 zunehmend verschwenkt, so daß die nicht mehr abgenommene Fadenmenge in die Fadenreserve aufgenommen wird. Gleichzeitig gibt der Signalgeber 28 ein für diese Verschwenkung des Fadenführarmes 21 kennzeichnendes Signal ab; die Regeleinrichtung 52 ändert die Frequenz des Frequenzsignales 53 im Sinne des Stillsetzens des Schrittmotors 3, wobei die Geschwindigkeit der Frequenzänderung aber durch den Integrator 64 auf einen Wert begrenzt ist, der unterhalb der Auslaufcharakteristik nach Fig. 5 liegt, so daß der Schrittmotor 3 bis zum Stillstand exakt der Frequenzänderung des Frequenzsignales 53 folgt.

Da beim Auslaufen des Schrittmotors 3 und der mit diesem gekuppelten Elemente das Reibungsmoment zusätzlich bremsend wirkt, was in dem Unterschied zwischen der Auslaufcharakteristik und der Anlaufcharakteristik zum Ausdruck kommt, ist die Zeitkonstante des dem Auslauf des Schrittmotors 3 zugeordneten Integrators 64 kleiner als jene des dem Motoranlauf zugeordneten Integrators 63. Das Verhältnis der beiden Zeitkonstanten ist in der Regel kleiner als etwa 4:1.

Der aus den Integratoren 63, 64 gebildete Schaltungsanordnung ist eine Diodenstrecke 65 nachgeschaltet, deren Ausgang über ein Tiefpaßfilter 66 mit einem Spannungs-/Frequenzwandler 67 verbunden ist, der das Frequenzsignal 53 liefert. Die Diodenstrecke 65 bildet eine Schwellwertschaltung, die verhindert, daß dem Spannungs-/Frequenzwandler 67 unterhalb eines unteren Schwellenwertes liegende Signalspannungen zugeleitet werden, die zur Folge hätten, daß vorübergehend ein Frequenzsignal mit für den Schrittmotor 3 unzulässig niedriger Frequenz abgegeben wird. Das Tiefpaßfilter 66 verhindert Störungen des Spannungs-/Frequenzwandlers 67.

Der Spannungs-/Frequenzwandler 67 ist aus den erwähnten Gründen ausgangsseitig mit einer Nullpunktsunterdrückung ausgebildet. Außerdem kann die Steilheit seiner Kennlinie verändert werden, um damit die Winkelstellung des Fadenführarmes 21 und somit die Größe der Fadenreserve für eine bestimmte stationäre . Fadenlaufgeschwindigkeit zweckentsprechend einstellen zu können.

Die dem Blockschaltbild nach Fig. 7 entsprechende Schaltung ist in ihren Einzelheiten in Fig. 8 veranschaulicht, wobei sich die Beschreibung auf wesentliche Einzelheiten beschränkt:

Dem Fototransistor 30 des Signalgebers 28 ist über das durch den Widerstand 70 und den Kondensator 71 gebildete Tiefpaßfilter 50 ein Transistor $T_1$ in Emitterfolgeschaltung mit Emitterwiderstand 90 nachgeschaltet, der den Spannungsfolger 51 bildet. Mit dem Emitter des Transistors $T_1$ ist ein Widerstand 72 verbunden, an den ein zweiter Widerstand 73 angeschlossen ist, der im Emitterkreis eines Transistors $T_2$ liegt, dessen Basis über einen Widerstand 74 mit Masse und über eine Diode 75 mit dem Emitter des Transistors $T_1$ verbunden ist. Parallel zu dem Transistor $T_2$ liegt ein Kondensator 76.

Der Kondensator 76 bildet im wesentlichen mit dem Widerstand 72 den dem Motoranlauf zugeordneten Integrator 63, dessen Zeitkonstante bspw. 100 msek. beträgt.

Wird beim Auslauf des Schrittmotors 3 wegen der entsprechenden Auswanderung des Fadenführarmes 21 das an dem Emitter des Transistors $T_1$ abgegebene Spannungssignal im Verhältnis zu dem an dem Kondensator 76 liegenden Spannungspotential negativ, so legt der als Emitterfolger geschaltete Transistor $T_2$ den Widerstand 73 parallel zu dem Widerstand 72 und zu dem Kondensator 76. Der Transistor $T_2$ wirkt deshalb als Schalter für das jeweilige Ein- oder Abschalten des Parallelwiderstandes 73 zu dem Widerstand 72.

An den Kondensator 76 schließt sich die von den beiden Dioden 77, 78 gebildete Diodenstrecke 65 an, deren beide Dioden 77, 78 durch einen Kondensator 79 überbrückt sind. Durch die Dioden 77, 78 wird der flache Verlauf der Entladekurve des Kondensators 76 im unteren Spannungsabschnitt unterdrückt. Um beim Hochlauf des Schrittmotors 3 ein sofortiges Ansprechen des Spannungs-/Frequenzwandlers 67 zu erreichen, sind die beiden Dioden 77, 78 durch den Kondensator 79 überbrückt, der aufgrund seiner Dimensionierung nur bei sprunghaften Spannungsänderungen wirksam ist.

Die Auslaufzeitkonstante des aus den Widerständen 72, 73 und dessen Kondensator 76 gebildeten Integrators 64 beträgt ca. ¼ der Zeitkonstante des dem Anlauf zugeordneten Integrators 63, der – wie erwähnt – von dem Widerstand 72 und dem Kondensator 76 gebildet ist. Wegen der Diodenstrecke 65 sind etwa nur 2–3 Auslaufzeitkonstanten bis zum völligen Abschalten des Schrittmotors 3 erforderlich.

An die Diodenstrecke 65 schließt sich das aus einem Widerstand 80 und einem Kondensator 81 bestehende Filter 66 an, an das ausgangsseitig der Spannungs-/Frequenzwandler 67 angeschlossen ist (4151/IC$_1$).

Der von einem IC gebildete Spannungs-/Frequenzwandler 67 ist auf seinem entsprechenden Steuereingang über einen Spannungsteiler 82, 83 auf eine vorbestimmte Spannung negativ vorgespannt (ca. 50 mV). Durch diese Nullpunktunterdrückung wird erreicht, daß in der Grenzstellung des Fadenführarmes 21 mit Sicherheit keine Impulse, d.h. kein Frequenzsignal 53, abgegeben werden. Im übrigen erzeugt der Spannungs-/Frequenzwandler 67 ein Frequenzsignal 53, dessen Impulsfolgefrequenz direkt proportional dem Spannungspotential des Eingangssignales ist. Die Steilheit des Spannungs-/Frequenzwandlers 67 kann durch ein Potentiometer 84 verändert werden. Auf diese Weise kann einer bestimmten Fadenlaufgeschwindigkeit eine bestimmte stationäre oder Ruhestellung des Fadenführarmes 21 in dem Bereich zwischen den Anschlagstiften 33, 34 zugeordnet werden. Durch einen äußeren Widerstand 85, der durch einen Kondensator 86 überbrückt ist, ist die maximale Impulsfrequenz des Frequenzsignales 53 derart eingestellt, daß bei der bei der maximalen Faden-Fördermenge pro Zeiteinheit eingenommenen Endstellung des Fadenführarmes 21 und damit maximaler Signalspannung auf dem Eingang 87 des Spannungs-/Frequenzwandlers 67 sich eine Fadenfördermenge von ca. 10 m/sek. ergibt.

Die Widerstände 88, 89 sowie die Kondensatoren 92, 91 dienen lediglich zur betriebsmäßigen Beschaltung des den Spannungsfrequenzwandler 67 bildenden IC und bedürfen deshalb keiner weiteren Erläuterung.

Der die Sollwert-Kraft auf den Fadenführhebel 21 ausübende Gleichstrommotor 25 ist permanent erregt und durch die Konstantstromquelle 56 mit konstantem Strom versorgt, die ihrerseits wiederum durch ein IC (IC$_2$-PPL 3717) gebildet ist, welches gleichzeitig auch die Leistungsendstufe 57 enthält. Über ein Spannungssignal auf einen Eingang 910 dieses IC lassen sich der Motorstrom und damit das von dem Gleichstrommotor 25 ausgeübte Drehmoment exakt auf einen jeweils gewünschten Wert einstellen. Die dazu erforderliche Signalspannung wird an dem Schleifer des Einstellpotentiometers 39 abgegriffen und dem Eingang 910 über einen von einem Transistor T$_3$ gebildeten Emitterfolger zugeleitet. Der Einstellbereich wird am oberen Ende mittels eines Potentiometers 93 und am unteren Ende über einen von einem Transistor T$_4$ und einem Emitterwiderstand 94 gebildeten Emitterfolger vorgegeben, der den Spannungsfolger 61 zusammen mit dem Addierglied 60 (Fig. 7) bildet. Auf die Basis des Transistors T$_4$ kann entweder über das aus einem Widerstand 95 und einer nachgeschalteten Diode 96 bestehende Trennglied 62 ein Fernstellsignal aufgegeben werden, durch das der mit dem Potentiometer 39 eingestellte Spannungswert verändert wird, bzw. es wird an dieser Stelle ein Kompensationssignal aufgeschaltet, das von dem Differenzierglied 59 herrührt. Das Differenzierglied 59 besteht im wesentlichen aus einem Kondensator 97 und einem durch eine Diode 98 überbrückten Widerstand 99. Die Einstellung des Kompensationssignales erfolgt über das Potentiometer 58, dem das am Ausgang des von dem Transistor T$_1$ mit dem nachgeschalteten Emitterwiderstand 90 gebildeten Spannungsfolger 51 auftretende Analogsignal zugeführt wird. Die Schleifer der beiden Potentiometer 58, 93 sind miteinander gekuppelt. Im übrigen ist diese Kompensationssignalaufschaltung derart auf die physikalischen Eigenschaften des ganzen Fadenführarmmechanismus einschließlich des Gleichstrommotors 25 abgestimmt, daß sie vorzugsweise nur bei verhältnismäßig kleinen Fadenspannungseinstellungen ( ≤ 3 p) wirksam wird. Dies wird insbesondere durch entsprechende Auslegung des Potentiometers 58 und eines zugeordneten Widerstandes 100 erreicht. Widerstände 101 und 102 dienen zur annähernden Linearisierung des Einstellbereiches. Die Diode 98 verhindert, daß eine negative Spannungsflanke den eingestellten Motorstromwert verringert. Die Diode 96 des Trenngliedes 62 bewirkt, daß der an dem Potentiometer 39 eingestellte Motorstromwert nur erhöht, jedoch nicht verringert werden kann.

Die im Vorstehenden beschriebene Ausführungsform der Fadenliefervorrichtung ist autark, d.h., das Gerät sorgt ohne Synchronisation mit einer äußeren Signalquelle stets dafür, daß die Spannung des abgegebenen Fadens, unabhängig von der Fadenliefergeschwindigkeit, d.h. dem Fadenverbrauch, stets auf einem vorgegebenen Sollwert gehalten wird, wobei innerhalb des Betriebsbereiches jede geforderte Fadenmenge positiv geliefert wird.

Durch eine einfache Ergänzung der elektrischen Schaltung, wie sie in Fig. 10 veranschaulicht ist, kann die Fadenliefervorrichtung auch mit einem externen Synchronisationssignal, das bspw. von einem zentralen Drehimpulsgeber der Rundstrickmaschine geliefert wird, derart angesteuert werden, daß die Fadenliefermenge mit diesem Synchronisationssignal synchronisiert ist. Diese Betriebsweise ist von Bedeutung bspw. bei schnellaufenden Ringelmaschinen, Sockenstrickmaschinen etc., bei denen die Strickgeschwindigkeit und die sich daraus ergebende Fadenliefergeschwindigkeit oberhalb eines unteren Wertes liegt, der durch die Start-/Stopp-Frequenz des jeweiligen Schrittmotors 3 vorgegeben ist.

Da die Fadenliefervorrichtung aufgrund der beschriebenen Ausbildung in der Lage ist, den extremen Änderungen der Fadenliefermenge beim Fadenwechsel zufolge der vorübergehenden Entleerung oder Auffüllung des Fadenspeichers zu folgen, ist die Fadenliefervorrichtung an sich für solche Maschinen hervorragend geeignet. Nach dem Hochlaufen des Fadenrades 5 und des Schrittmotors 3 anschließend an einen Fadenwechsel erfolgt eine positive Fadenlieferung, um damit einen absolut gleichmäßigen Warenausfall zu gewährleisten. Das Umschalten der Fadenliefervorrichtung von dem erläuterten autarken Betrieb während des Anlaufvorganges auf die positive Betriebsart in Synchronisation mit einem äußeren Synchronisationssignal erfolgt selbsttätig, so daß keine zusätzlichen externen Mittel, bspw. eigene Steuerimpulse und dergl., hierfür benötigt werden:

In Fig. 10 sind die zum Verständnis erforderlichen Teile des Blockschaltbildes nach Fig. 7 mit den gleichen Bezugszeichen eingezeichnet; sie sind im einzelnen nicht weiter erläutert.

Zwischen dem Ausgang der Regeleinrichtung 52 und der Ansteuerelektronik 54 des Schrittmotors 3 liegt ein elektronischer Schalter 105, der es gestattet, wahlweise das von der Regeleinrichtung 52 abgegebene Frequenzsignal 53 (autarker Betrieb), oder ein über einen Eingang 106 von einer äußeren Synchronisationsquelle zugeführtes Synchronisations-Frequenzsignal 107 zuzuführen. Zur Ansteuerung des elektronischen Schalters 105 dient eine Steuerschaltung 108, die einen Spannungs-/Frequenzwandler 109, ein Einstellpotentiometer 110 und einen eine gewisse Hysterese aufweisenden Komparator 111 enthält. Der Spannungs-/Frequenzwandler 109 wandelt das externe Synchronisations-Frequenzsignal 107 in eine analoge Spannung um, die über einen Widerstand 112 an dem Einstellpotentiometer 110 anliegt, das auf der anderen Seite über einen Widerstand 113 mit dem Analogsignal am Ausgang der Integratoren 63, 64 beaufschlagt ist. Der Komparator 111 vergleicht die beiden Spannungen und gibt sodann ein Umschaltsignal auf den elektronischen Schalter 105. Das Einstellpotentiometer 110 gestattet es, den Umschaltpegel einzustellen.

Wenn der Anlaufvorgang des Schrittmotors 3 beendet ist, nimmt der Fadenführarm 21 die der jeweiligen Fadenlaufgeschwindigkeit im stationären Zustand entsprechende Stellung ein, so daß auch das am Ausgang der Integratoren 62, 63 über den Widerstand 113 abgegriffene Analogsignal eine bestimmte Größe aufweist. Durch Vergleich dieser Größe mit der dem äußeren Synchronisations-Frequenzsignal 107 entsprechenden Analogspannung erkennt der Komparator 111 selbsttätig die Beendigung des Anlaufsvorganges des Schrittmotors 3, womit er das Umschaltsignal von autarkem Betrieb auf Positivbetrieb abgibt. Für das Zurückschalten des elektronischen Schalters 105, bspw. beim Auslegen des Fadens durch den Ringelapparat gilt Entsprechendes.

Wird bspw. beim Auslegen des Fadens durch den Ringelapparat die Fadenabnahme von dem Fadenrad 5 unterbrochen, so wird der Fadenführarm 21 von dem Gleichstrommotor 25 über den Betätigungsarm 27 zunächst, bezogen auf Fig. 7, auf die linke Anschlagstellung zu verschwenkt. Dabei wird durch das von dem Signalgeber 28 abgegebene, stellungsabhängige Signal über die Regeleinrichtung 52 etc. der Schrittmotor 3 in bereits erläuterter Weise derart beeinflußt, daß er seine Drehzahl und damit die in der Zeiteinheit gelieferte Fadenmenge zunehmend entsprechend herabsetzt. Sowie der Fadenführarm 21 innerhalb seines durch die beiden Anschlagstifte 33, 34 begrenzten Bewegungsweges in der Richtung auf den linken Anschlagstift 33 zu in einen bestimmten Bereich, den sogenannten Abstellbereich, eintritt, wird der Schrittmotor 3 stillgesetzt. Der Fadenführarm 21 kommt aber dann nicht augenblicklich zum Stillstand, sondern er wandert mit seine systemeigenen Trägheit soweit in den Abstellbereich hinein, bis zum einen der Schrittmotor 3 tatsächlich zum Stillstand gekommen ist und zum anderen der durch die Öse 19 verlaufende Faden von dem nach wie vor von dem Gleichstrommotor 25 mit der Sollwert-Kraft beaufschlagten Fadenführarm 21 wieder gespannt worden ist und damit eine Weiterbewegung des Fadenführarms 21 verhindert. Der verbraucherseitig durch die Fadenklemme des Ringelapparates festgehaltene Faden ist auf der anderen Seite durch das Haltemoment des Schrittmotors 3 gehalten; er wird durch den Fadenführarm 21 und den Gleichstrommotor 25 auf der an dem Potentiometer 39 eingestellten Sollwert-Spannung gehalten. Insbesondere bei höheren Fadenspannungssollwerten besteht die Gefahr, daß der ausgelegte Faden langsam aus der Fadenklemme herausgezogen wird, mit dem Ergebnis, daß beim nächstfolgenden Fadeneinlegen eine Betriebsunterbrechung auftritt. Auch bei längerzeitigem Abstellen der Rundstrickmaschine, bspw. über Nacht, können sich durch diese aufrecht erhalten bleibende Fadenspannung Unzuträglichkeiten ergeben, indem bspw. das Maschenbild in der letzten Maschenreihe ungünstig beeinflußt wird. Diese Probleme treten besonders bei der Verarbeitung von Gummifäden mit einer Fadenspannung von mehr als 3 p (30 mN) auf.

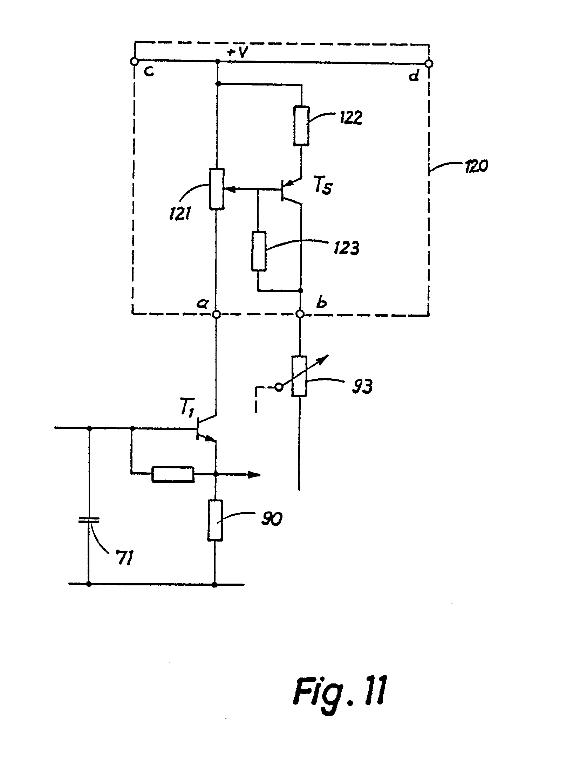

Erforderlichenfalls kann diesen Schwierigkeiten durch eine kleine Modifikation der Regeleinrichtung 52 abgeholfen werden, die in Fig. 11 veranschaulicht ist:

Das in Fig. 11 dargestellte Schaltungsteil 120 kann wahlweise anstelle des in Fig. 8 gestrichelt angedeuteten, gleichbezeichneten Schaltungsteils in die Schaltung nach Fig. 8 eingefügt werden. Entsprechende Anschlußpunkte sind mit den Buchstaben a bis d bezeichnet.

Bei dem Schaltungsteil 120 liegt im Kollektorkreis des Transistors $T_1$ ein Einstellpotentiometer 121. Das von dem Fototransistor 30 kommende, für die Stellung des Fadenführarmes 21 kennzeichnende Analogsignal wird in dem Kollektorkreis des Transistors $T_1$ praktisch um 180° gedreht und über den Schleifer des Einstellpotentiometers 121 der Basis eines pnp-Transistors $T_5$ zugeführt, der im wesentlichen als Schaltverstärker arbeitet. Im Emitterkreis des Transistors $T_5$ liegt ein Emitterwiderstand (ca. 560 Ω), während der Kollektor des Transistors über einen Gegenkopplungswiderstand 123 mit der Basis verbunden ist. Im dem Kollektorkreis des Transistors $T_5$ liegen über den Anschlußpunkt b ansonsten das Potentiometer 93 (Fig. 8) und die diesem nachgeschalteten Schaltelemente.

Die durch den Gegenkopplungswiderstand 123 erzeugte Gegenkopplung von Kollektor zur Basis des Transistors $T_5$ verhindert ein abruptes Kippen des Kollektorpotentiales bei Erreichen eines bestimmten Spannungspotentiales an der Basis. Der Übergang erfolgt ohne Hysterese und weich, solange die Bewegung des Fadenführarmes 21 weich vonstatten geht. Gleichzeitig dient der Widerstand 123 (ca. 100 kΩ) zur Einstellung des untersten Wertes der Fadenspannung, mit der der Faden bei stillstehendem Schrittmotor 3 durch den Fadenführarm 21 beaufschlagt wird.

Wenn der Fadenführarm 21, bspw. beim Ausringeln des Fadens, soweit nach links verschwenkt ist (Fig. 10), daß der Schrittmotor 3 stillgesetzt wird, d.h. wenn sich der Fadenführarm 21 in dem Abstellbereich seines Bewegungsweges befindet, ist der Transistor $T_5$ praktisch stromlos. Damit erhalten aber die beiden Potentiometer 93, 39 nurmehr einen geringen Strom über den Gegenkopplungswiderstand 123, der ausreicht, um einen solchen Spannungsabfall an der Basis des Transistors $T_3$ hervorzurufen, daß dieser an seinem Emitter dem die Konstantstromquelle 56 bildenden IC über dessen Eingang 910 ein wesentlich herabgesetztes Spannungssignal zuführt. Das hat zur Folge, daß der Gleichstrommotor 25 mit einem entsprechend verringerten Erregerstrom beaufschlagt wird, so daß auch die von dem Betätigungsarm 27 auf den Fadenführarm 21 ausgeübte Sollwert-Kraft auf einen zugehörigen, erniedrigten Wert herabgesetzt ist, der bspw. einer Fadenspannung von 0,5 p entspricht.

Damit wird der ausgelegte und durch die Fadenklemme des Ringelapparates endseitig gehaltene Faden bei stillstehendem Fadenrad 5 unter dieser verhältnismäßig kleinen und deshalb unschädlichen Spannung gehalten.

Sowie der Faden durch den Ringelapparat wieder eingeringelt wird, beginnt der Fadenführarm 21 rasch nach rechts (Fig. 10) auszuwandern. Der Fototransistor 30 gibt ein entsprechendes, stellungsabhängiges Analogsignal an den Transistor $T_1$ ab. Bei Erreichen einer bestimmten Spannungsschwelle wird der Transistor $T_5$ vollkommen leitend, womit sein Kollektorpotential annähernd den Wert +V erreicht, womit die Potentiometer 93, 39 wiederum an +V liegen, was dem ursprünglichen Zustand entsprechend Fig. 8 entspricht und die volle, normale Funktion der Einstellpotentiometer 39, 93 erlaubt.

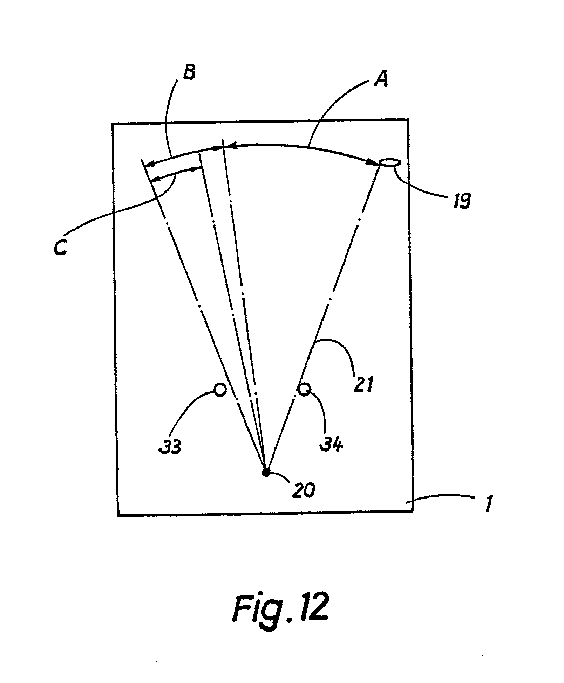

Die beschriebene Funktion des Schaltungsteiles 120 ergibt die in Fig. 12 schematisch angedeutete Wirkungsweise der Fadenliefervorrichtung:

Der durch die beiden Anschlagstifte 33, 34 begrenzte Bewegungsweg des um die Horizontalachse 20 schwenkbar gelagerten Fadenführarmes 21 entspricht einem auf einem Kreisbogen liegenden Bewegungsweg der zugeordneten Fadenöse 19. Dieser Gesamtbewegungsweg ist in mehrere Bereiche aufgeteilt:

Steht der Fadenführarm 21 innerhalb des mit A bezeichneten ersten Bereiches, der sich an den rechten Anschlagstift 34 anschließt, so befindet er sich innerhalb des normalen Arbeitsbereiches oder -sektors, in dem auf den durch die Öse 19 geführten Faden die an dem Potentiometer 39 eingestellte Sollwert-Kraft ausgeübt wird, so daß der Faden unter einer entsprechenden konstanten Fadenspannung gehalten ist. Die Fadenreserve weist ihre Ausgangsgröße auf; die jeweilige Stellung des Fadenführarmes 21 innerhalb des Arbeitsbereiches A hängt von der Fadenlaufgeschwindigkeit und damit der notwendigen Drehzahl des Schrittmotors 3 ab.

An den ersten oder Arbeitsbereich A anschließend erstreckt sich bis zu dem linken Anschlagstift 33 hin ein zweiter oder Abstellbereich bzw. -sektor B. Sowie der Fadenführarm 21, bspw. beim Ausringeln des Fadens durch den Ringelapparat, die Grenze zwischen den beiden Bereichen A und B überschreitet und in den Abstellbereich B eindringt, wird der Schrittmotor 3 abgestellt. Er kommt in der durch seine Auslaufcharakteristik vorgegebenen Zeit zum Stillstand, wie dies bei der Erläuterung der Regeleinrichtung 52 im einzelnen dargelegt wurde.

Durch die im Vorstehenden beschriebene Funktion des Schaltungsteiles 120 ist der Abstellbereich B nochmals unterteilt, und zwar in einen dritten Bereich C, in dem die Fadenspannung abgesenkt ist, während in dem verbleibenden Bereich B, C die auch in dem Arbeitsbereich A geltende eingestellte Sollwert-Fadenspannung aufrecht erhalten bleibt.

Wenn somit der Faden, bspw. beim Ringeln bei relativ hoher Fadengeschwindigkeit, abrupt ausgelegt wird, dringt der Fadenführarm 21 mit seiner systemeigenen Trägheit soweit in die Abstellzone B ein, bis der Schrittmotor 3 zum Stillstand gekommen ist und der Faden wieder gespannt ist und damit die Weiterbewegung des Fadenführarmes 21 verhindert. Die genaue Stellung oder "Eindringtiefe", die der Fadenführarm in dem Abstellbereich B erreicht, hängt u.a. davon ab, bei welcher Fadengeschwindigkeit und Fadenspannung und wie schnell die Fadenabnahme unterbrochen wurde. Verbleibt der Fadenführarm dabei in dem an den Arbeitsbereich A anschließenden Teil B, C des Abstellbereiches B, so bleibt bei stillgesetztem Schrittmotor 3 die Fadenspannung auf dem durch das Potentiometer 39 eingestellten Sollwert, der auch für den Strickbetrieb gilt.

Sollte nun die Strickmaschine den unter dieser Fadenzugspannung stehenden Faden nicht halten können, weil bspw. die Fadenklemme des Ringelapparates leicht nachgibt, so wandert der Fadenführhebel 21 unter der Wirkung der von dem Gleichstrommotor 25 über den Betätigungshebel 27 ausgeübten Sollwert-Kraft langsam in Richtung auf den linken Anschlagstift 33 zu. Sowie er dabei aber in den Bereich C des Abstellbereiches B eintritt, wird durch das Schaltungsteil 120 automatisch durch entsprechende Verringerung der Erregung des Gleichstrommotors 25 die Fadenspannung auf einen wesentlich kleineren Wert von bspw. 0,5 p herabgesetzt. Dieser Wert ist auf jeden Fall so klein, daß die von dem Faden ausgeübte Zugkraft unschädlich ist. Er ist aber nicht 0 und darf deshalb auch nicht unterschritten werden, weil sonst die Maschinenabstellfunktion durch den Schalter 36 ausgelöst würde. Dadurch, daß der Fadenführarm 21 somit – wenn auch mit wesentlich herabgesetzter Kraft-Beaufschlagung – an einer Stelle innerhalb des Abstellteilbereiches C von dem Faden bei stillstehendem Schrittmotor 3 gehalten bleibt, ist sichergestellt, daß der Faden sich auch bei stillstehendem Schrittmotor 3 noch in dem Fadenführer, in der Nadel oder der Fadenklemme des Ringelapparates etc. befindet und im weiteren Arbeitsverlauf ordnungsgemäß weiterverstrickt werden kann. Sollte der Fadenführarm 21 aber soweit verschwenkt worden sein, daß er in der Nähe des linken Anschlagstiftes 33 eine Betätigung des Schalters 36 auslöst, bedeutet dies, daß der Faden herausgezogen oder abgerissen wurde, d.h., daß auf jeden Fall eine Betriebsstörung vorliegt.

Ohne eine solche Betriebsstörung wird der Fadenführarm bei Wiederaufnahme des Fadenverbrauchs aus seiner beschriebenen Stellung in dem Abstellbereich B heraus nach rechts in den Arbeitsbereich A mehr oder weniger schnell zurückgeführt, indem er mit nur geringem "Überschießen" sich auf die für die jeweils vorhandene Fadenliefergeschwindigkeit geltende stationäre Drehzahl-Position zu bewegt.

Bei sehr schnellem Hochlauf der Strickmaschine auf große Fadengeschwindigkeiten oder beim Einringelvorgang mit hoher Fadengeschwindigkeit verschiebt sich der Einschaltpunkt für den Schrittmotor 3 in Richtung zu den linken Anschlagstift 33 zu, d.h. die Fadenförderung durch das Fadenrad 5 setzt früher ein, und zwar in Abhängigkeit von der Fadengeschwindigkeit beim Beginn der Fadenabnahme. Dies ist deshalb vorteilhaft, weil sich dadurch insbesondere bei hohen Fadengeschwindigkeiten und niedrigen Fadenspannungen, ein geringeres "Überschießen" des Fadenführhebels 21 ergibt, da die passive Fadenreserve, die durch den im Abstellbereich B stehenden Fadenführarm 21 gegeben ist, praktisch vollständig ausgenutzt werden kann. Dies erlaubt es, bspw. höhere Ringelgeschwindigkeiten zu erzielen. Außerdem erhalten bei richtig gewähltem Einschaltpunkt für den Schrittmotor 3 und richtig gewähltem Umschaltpunkt der Fadenspannung von dem abgesenkten Wert von bspw. 0,5 p auf den betriebsmäßigen Sollwert von bspw. 5 p die ersten Nadeln der Strickmaschine noch einige Zentimeter Fadenlänge mit niedrigerer Fadenspannung, was für den Strickbeginn vorteilhaft ist, weil die Gefahr des Herausgleitens des Fadens vermindert wird. Im übrigen erfolgt der Übergang von dem niedrigen Fadenspannungswert auf den betriebsmäßigen Sollwert der Fadenspannung weich – was auch in der umgekehrten Richtung gilt – womit Prellerscheinungen verhütet werden.

Die im Vorstehenden beschriebene und insbesondere in den Fig. 1 bis 4 in ihrer konstruktiven Gestaltung dargestellte Fadenliefervorrichtung weist als Fadenlieferelement das Fadenrad 5 auf, das unter Ausbildung des aus einer Anzahl Fadenwindungen 190 bestehenden Speicherwickels von dem Faden mehrfach umschlungen ist und deshalb eine im wesentlichen schlupflose Mitnahme des Fadens an seinem Umfang gewährleistet, wie dies auf Seite 14, zweiter Absatz, erläutert ist. Eine solche Bauart der Fadenliefervorrichtung ist insbesondere zur Lieferung von normalen Fäden aus Endlos- oder Stapelfasern geeignet, die keine übermäßige Elastizität aufweisen.

Für hochelastische Garne, umsponnene oder nackte Gummifäden etc. sind Fadenliefervorrichtung mit anderem Aufbau zweckmäßig, auf die sich aber die Erfindung in gleicher Weise anwenden läßt. Diese Fadenliefervorrichtungen sind grundsätzlich derart aufgebaut, daß die vorzugsweise zylindrischen Fadenabzugsspulen oder -wickelkörper an ihrem Umfang reibschlüssig angetrieben werden, wie dies im einzelnen bspw. in der Zeitschrift "Knitting International", June 1985, Seite 47 ff, erläutert ist. In diesem Falle ist das Fadenlieferelement im Sinne der Erfindung eine mit dem Umfang einer Fadenabzugsspule oder eines Fadenwickelkörpers reibschlüssig kuppelbare zylindrische Antriebswalze.

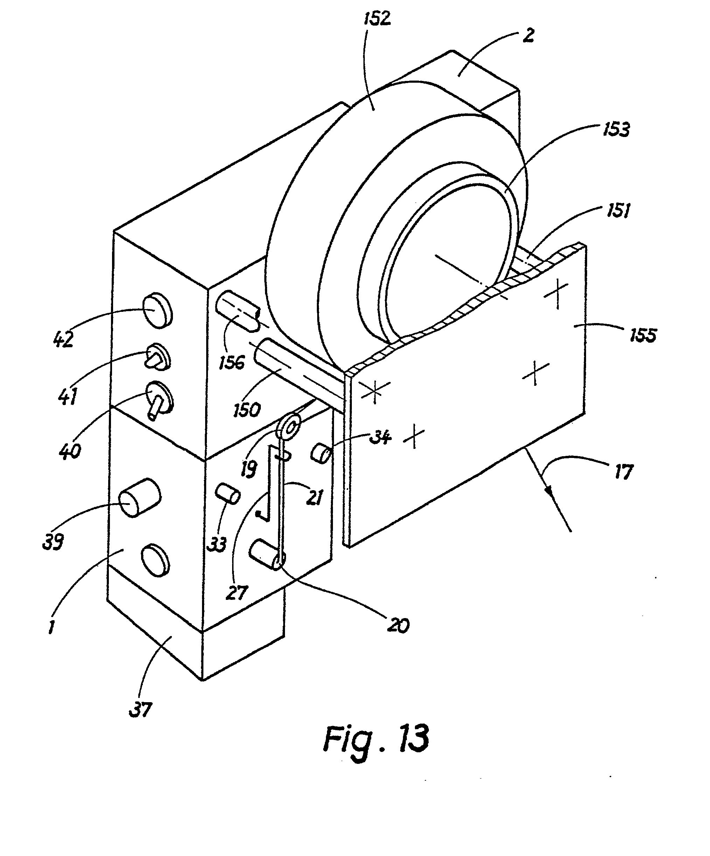

Ausführungsformen einer solchen Fadenliefervorrichtung sind in den Fig. 13 bis 16 veranschaulicht, in denen den bereits beschriebenen Ausführungsformen einer Fadenliefervorrichtung entsprechende Teile mit gleichen Bezugszeichen versehen sind, so daß sich eine nochmalige Erörterung erübrigt:

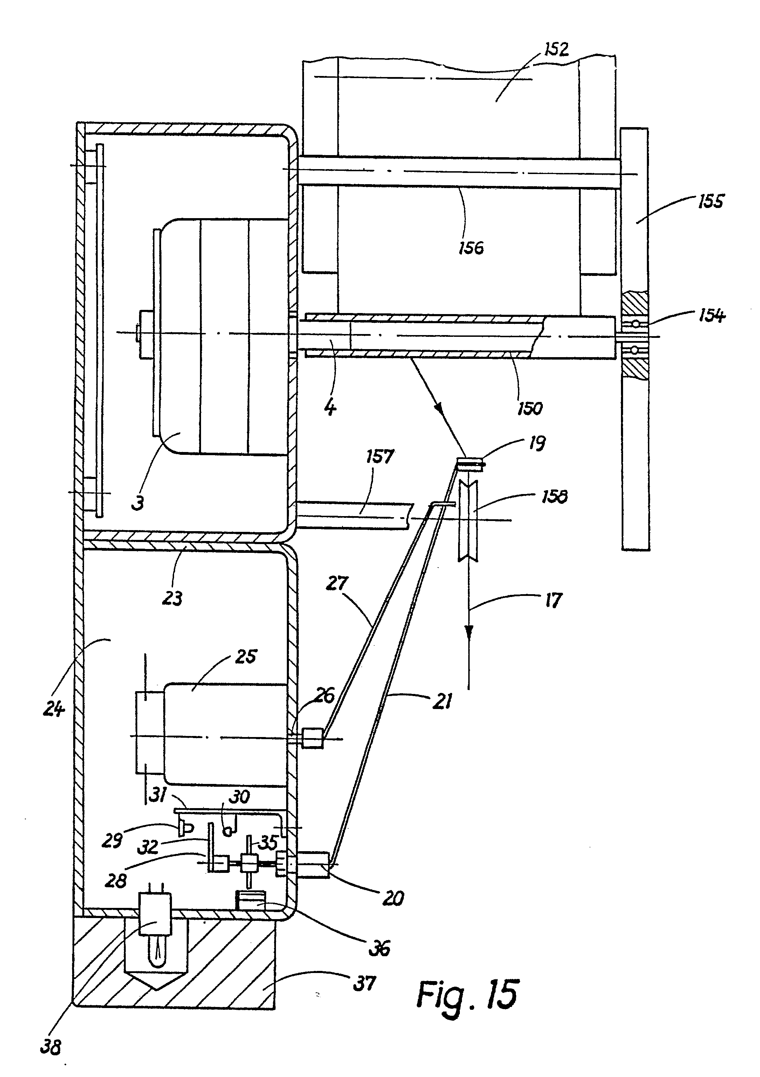

An dem Gehäuse 1, das wiederum den Halter 2 trägt und das in seinem oberen Teil den elektrischen Schrittmotor 3 aufnimmt (Fig. 15), sind zwei achsparallele, zylindrische Walzen 150, 151 drehbar gelagert, die in der Betriebsstellung des Gerätes horizontal ausgerichtet sind. Die beiden Walzen 150, 151 bilden eine Abspulstelle für wenigstens eine Fadenabzugsspule 152, deren Spulenhülse mit 153 bezeichnet ist und die mit ihrer Umfangsfläche auf den beiden Walzen 150, 151 aufliegt. Der Abstand der Walzen 150, 151 ist kleiner als der Durchmesser der Spulenhülse 153, so daß bei leerer Abzugsspule 152 die Spulenhülse 153 nicht zwischen den beiden Walzen 150, 151 durchfällt.

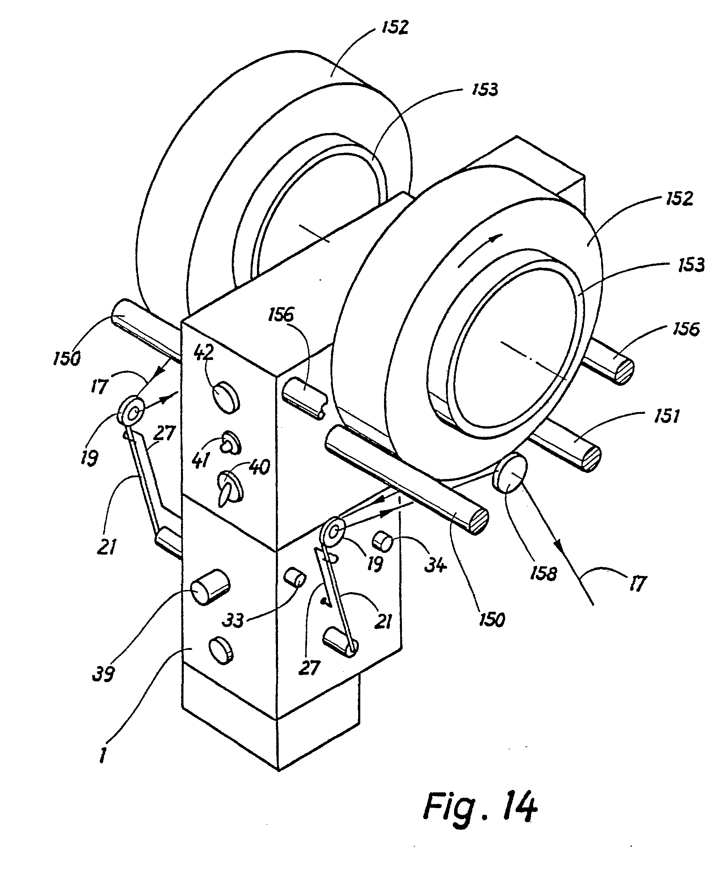

Die beiden Walzen 150, 151 können entweder in der auf Fig. 13 ersichtlichen Weise lediglich auf einer Gehäuseseite vorragend angeordnet sein, doch ist schon wegen des Gewichtsausgleiches die Anordnung nach Fig. 14 häufig zweckmäßiger, bei der die beiden Walzen 150, 151 an dem im wesentlichen rechteckigen und parallelflankig begrenzten Oberteil des Gehäuses 1 auf beiden Seiten koaxial vorragend drehbar gelagert sind, derart, daß sich aus beiden Gehäuseseiten Abspulstellen ergeben. Die Länge der Walzen 150, 151 ist der Spulenhöhe entsprechend gewählt; es sind auch Ausführungsformen denkbar, bei denen mehrere Fadenabzugsspulen 152 koaxial nebeneinanderliegend auf den Walzenpaaren 150, 151 aufgelegt werden können. Die beiden Walzen 150, 151 sind endseitig über Wälzlager 154 (Fig. 15) in einer Stirnplatte 155 drehbar gelagert, die ihrerseits über Streben 156 mit dem Oberteil des Gehäuses 1 starr verbunden ist.

Unterhalb der beiden Walzen 150, 151 ist für jede Abspulstelle eine um eine horizontale Achse 157 frei drehbare Fadenleitrolle 158 angeordnet, die ein feststehendes Fadenleitelement bildet und von der aus der Faden 17 zu dem Fadenverbraucher läuft.

Von den beiden Walzen ist die als Hohlwelle ausgebildete Walze 150 (Fig. 15) unmittelbar auf die Welle 4 des Schrittmotors 3 drehfest aufgesteckt. Sie bildet deshalb eine Antriebswalze, die mit dem Umfang der auf die beiden Walzen 150, 151 aufgelegten Abzugsspule 152 reibschlüssig gekuppelt ist. Die andere Walze 151 ist an dem Oberteil des Gehäuses 1 lediglich drehbar gelagert.

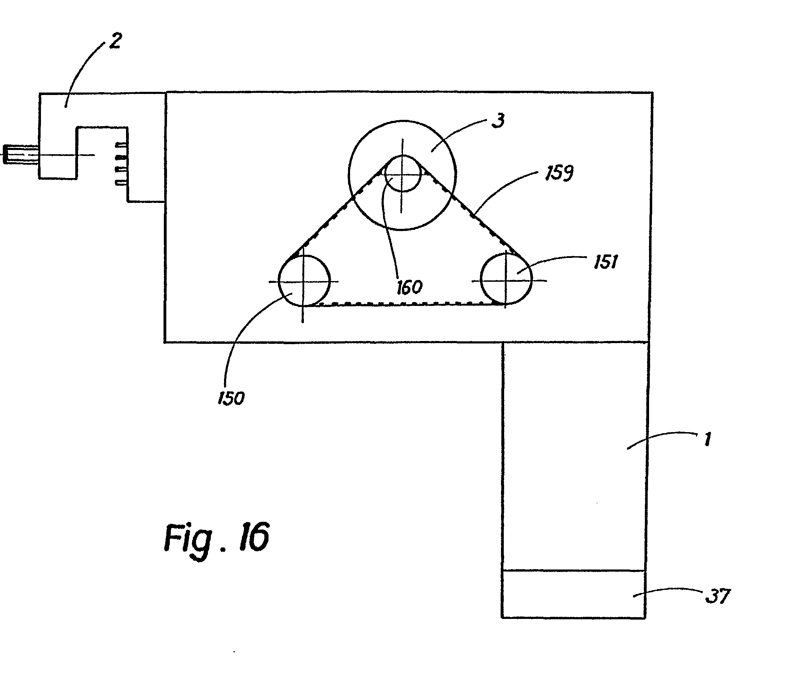

Grundsätzlich können aber auch beide Walzen 150, 151 als Antriebswalzen wirken, wie dies in Fig. 16 schematisch veranschaulicht ist. In diesem Falle sind die beiden Walzen 150, 151 über einen endlosen Zahnriemen 159 und drehfest auf sie aufgesetzte Zahnriemenscheiben mit einer auf die Welle des Schrittmotors 3 aufgekeilten Zahnriemenscheibe 160 formschlüssig getrieblich gekuppelt. Der Zahnriemen 159 ist in dem Oberteil des Gehäuses 1 untergebracht. Er gewährleistet eine Zwangssynchronisation der Drehbewegungen der beiden Walzen 150, 151 miteinander und mit der Drehbewegung des Schrittmotors 3, derart, daß die Umfangsgeschwindigkeit beider Walzen 150, 151 stets gleich groß ist.

Der von einer auf ein Walzenpaar 150, 151 aufgelegten Abzugsspule 152 kommende Faden 17 wird durch die Antriebswelle 151 in der aus den Fig. 13 bis 15 ersichtlichen Weise umgelenkt. Er verläuft durch die Öse 19 des Fadenführarmes 21 und von diesem aus über die Fadenrolle 158 zu dem Fadenverbraucher, so daß zwischen der Antriebswalze 151 und der Fadenrolle 158 wiederum die Fadenreserve ausgebildet ist, die durch den Fadenführarm 21 in bereits beschriebener Weise abgetastet und geregelt wird. Der Fadenführarm 21 ist über den Betätigungsarm 27 von dem Gleichstrommotor 25 mit der Sollwert-Stellkraft beaufschlagt, die der jeweils eingestellten Fadenspannung entspricht. Auch hier ist die Fadenreserve so bemessen, daß sie den Anlauf des Schrittmotors 3 und dessen Auslauf ermöglicht, ohne daß er mit dem ihn speisenden Impulssignal außer Tritt fällt.

Bei der in Fig. 14 dargestellten Ausführungsform mit zwei Abspulstellen beidseitig des Gehäuses 1 ist in der Regel jedem der beiden auf gegenüberliegenden Gehäuseseiten vorragenden Walzenpaare 150, 151 ein eigener Antriebs-Schrittmotor 3 zugeordnet, der über einen eigenen Fadenführarm 21 und entsprechender Elektronik (Fig. 8) geregelt ist. Dabei können die beiden Walzen jedes Walzenpaares 150, 151 für sich mit einem eigenen Zahnriemengetriebe gemäß Fig. 16 synchronisiert sein; es ist aber auch – was ganz allgemein für alle Ausführungsformen gilt – eine elektrische Synchronisation der Walzen 150, 151 in der Weise denkbar, daß jede Walze in der aus Fig.15 ersichtlichen Weise mit einem eigenen Schrittmotor 3 gekuppelt ist und die beiden Schrittmotoren dann auf elektrischem Wege miteinander synchronisiert sind.

Eine andere Alternative besteht darin, daß für bestimmte Anwendungsfälle lediglich für das einer Abspulstelle zugeordnete Walzenpaar 150, 151 eine Regelung über den Fadenführarm 21 vorgesehen ist, während auf der anderen Abspulstelle der Fadenführarm 21 nur einen normalen Absteller betätigt, der bei Fadenbruch etc. anspricht. Das zugehörige Walzenpaar 150, 151 ist dann mit konstanter Drehzahl angetrieben.

Schließlich sich auch Ausführungsformen denkbar, bei denen die Fäden mehrerer Abzugsspulen über einen gemeinsamen Fadenführarm 21 mit zugehöriger Regeleinrichtung geleitet sind, der über die zugeordnete Regeleinrichtung den Walzenantrieb derart beeinflußt, daß alle abgetasteten Fäden innerhalb des eingestellten Fadenspannungssollwertbereiches bleiben.

## Patentansprüche

1. Fadenliefervorrichtung mit elektronischer Fadenspannungsregelung für fadenverarbeitende Textilmaschinen, insbesondere Strick- oder Wirkmaschinen, mit einem den Faden vorzugsweise im wesentlichen schlupflos fördernden, drehbar gelagerten Fadenlieferelement, dem Fadenleitelemente zugeordnet sind und das mit einem es antreibenden, frequenzgeregelten elektrischen Motor gekuppelt ist, mit im Fadenlaufweg hinter dem Fadenlieferelement liegenden um den von diesem ablaufenden Faden überwachenden Fadenspannungs-Fühlmitteln, die ein elektrisches Signal abgeben, sowie mit einer dieses Signal verarbeitenden elektrischen Regeleinrichtung, die den Motor im Sinne der Konstanthaltung der überwachten Fadenspannung auf einem eingestellten Sollwert mit einem Frequenzsignal speist, dadurch gekennzeichnet, daß auf dem Fadenlaufweg hinter dem Fadenlieferelement (5) eine Einrichtung (15, 16, 19) zur Bildung einer Fadenreserve angeordnet ist, deren Größe zur Deckung des Fadenbedarfes während des Anlaufes des Motors (3) ausreichend bemessen ist, daß dieser Einrichtung (15, 16, 19) Mittel (28, 52) zugeordnet sind, um die Fadenreserve spätestens nach dem Anlaufen des Motors (3) selbsttätig wieder auf eine Ausgangsgröße aufzufüllen, und daß die Regeleinrichtung (52) eine Schaltungsanordnung (63, 64) aufweist, die die zeitliche Änderung der Frequenz des Frequenzsignals (53) zumindest während des Anlaufes des Motors (3) derart begrenzt, daß der belastete Motor (3) der Frequenzänderung zu folgen vermag.

2. Fadenliefervorrichtung nach Anspruch 1, dadurch gekennzeichnet, daß durch die Schaltungsanordnung (63, 64) die Änderung der Frequenz des Frequenzsignales (53) auch zumindest während des Auslaufes des Motors (3) derart begrenzt ist, daß der belastete Motor (3) der Frequenzänderung zu folgen vermag und daß der Einrichtung zur Bildung der Fadenreserve Mittel (28, 52, 25) zugeordnet sind, um die während des Auslaufes des Motors (3) gelieferte überschüssige Fadenmenge in die Fadenreserve aufzunehmen.

3. Fadenliefervorrichtung nach Anspruch 1 oder 2, dadurch gekennzeichnet, daß die Schaltungsanordnung einen Integrator (63, 64) für das von den Fadenspannungsfühlmitteln abgegebene elektrische Signal aufweist.

4. Fadenliefervorrichtung nach Anspruch 3, dadurch gekennzeichnet, daß der dem Anlaufen des Motors (3) zugeordnete Integrator (63) eine größere Zeitkonstante aufweist als der dem Auslaufen des Motors (3) zugeordnete Integrator (64).

5. Fadenliefervorrichtung nach Anspruch 4, dadurch gekennzeichnet, daß die beiden Integratoren (63, 64) durch ein RC-Glied (72, 73; 76) gebildet sind, dessen Ohmscher Widerstand signalabhängig auf zwei verschiedene Werte umschaltbar ist.

6. Fadenliefervorrichtung nach einem der vorhergehenden Ansprüche, dadurch gekennzeichnet, daß die Einrichtung zur Bildung der Fadenreserve mindestens ein auf einem vorbestimmten Weg beweglich gelagertes Fadenführelement (21) aufweist, dem wenigstens ein feststehendes Fadenleitelement (15; 16; 158) zugeordnet ist, das mit dem beweglichen Fadenführelement (21) einen verlängerten Fadenlaufweg ausbildet und daß das bewegliche Fadenführelement (21) mit einer entgegen der an ihm angreifenden Fadenzugkraft wirkenden, einstellbaren Sollwert-Kraft beaufschlagt und mit einem Signalgeber (28) der Fühlmittel gekuppelt ist, der ein von der Stellung des beweglichen Fadenführelementes (21) abhängiges Signal erzeugt.

7. Fadenliefervorrichtung nach Anspruch 6, dadurch gekennzeichnet, daß der Signalgeber (28) ein das bewegliche Fadenführelement (21) oder ein mit diesem verbundenes Teil (32) abtastender elektrooptischer Signalgeber ist.

8. Fadenliefervorrichtung nach Anspruch 6 oder 7, dadurch gekennzeichnet, daß das von dem Signalgeber (28) erzeugte Signal in einer vorgegebenen funktionellen Abhängigkeit von der jeweiligen Stellung des beweglichen Fadenführelementes (21) steht, derart, daß mit zunehmender Auslenkung des Fadenführelementes (21) im Sinne zunehmender Fadenspannung das Signal unterproportional zunimmt.

9. Fadenliefervorrichtung nach Anspruch 6, dadurch gekennzeichnet, daß die das bewegliche Fadenführelement (21) beaufschlagende Sollwert-Kraft im wesentlichen wegunabhängig konstant ist.

10. Fadenliefervorrichtung nach Anspruch 6, dadurch gekennzeichnet, daß das bewegliche Fadenführelement ein schwenkbar gelagerter, mindestens ein Fadenleitorgan (19) tragender Fadenführhebel (21) ist.

11. Fadenliefervorrichtung nach einem der Ansprüche 6–10, dadurch gekennzeichnet, daß das bewegliche Fadenführelement (21) mit einem die Sollwert-Kraft erzeugenden elektromagnetischen Sollwert-Geber (25) gekuppelt ist, dessen Strom einstellbar ist.

12. Fadenliefervorrichtung nach Anspruch 11, dadurch gekennzeichnet, daß der elektromagnetische Sollwert-Geber mit der Regeleinrichtung (52) verbunden ist, die bei Auftreten einer Änderung des von dem Signalgeber (28) abgegebenen elektrischen Signales zeitweilig ihm ein die Sollwert-Kraft in einem der Änderung der Fadenspannung entgegenwirkenden Sinne beeinflussendes Kompensationssignal aufschaltet.

13. Fadenliefervorrichtung nach Anspruch 12, dadurch gekennzeichnet, daß das Kompensationssignal über ein Differenzierglied (59) von dem von dem Signalgeber (28) abgegebenen Signal abgeleitet wird.

14. Fadenliefervorrichtung nach einem der Ansprüche 11–13, dadurch gekennzeichnet, daß der elektromagnetische Sollwert-Geber (25) einen Eingang (bei 62) für von einem zentralen Geber kommende, die Sollwert-Kraft verstellende Signale aufweist.

15. Fadenliefervorrichtung nach einem der Ansprüche 6–14, dadurch gekennzeichnet, daß der Bewegungsweg des beweglichen Fadenführelementes (21) begrenzt ist und daß in dem Bewegungsweg in der Nähe der Grenzen (33, 34) mit dem Fadenführelement (21) zusammenwirkende Fühler (35, 36; 43, 44) angeordnet sind, die jeweils ein Abschaltsignal für den Motor (3) und/oder die Maschine abgeben.

16. Fadenliefervorrichtung nach einem der vorhergehenden Ansprüche, dadurch gekennzeichnet, daß die Regeleinrichtung (52) einen Eingang (106) für ein von einer äußeren Synchronisationsquelle kommendes Synchronisationssignal (107) aufweist und daß der Motor (3) nach Erreichen einer der eingestellten Sollwert-Fadenspannung entsprechenden Drehzahl durch die Regeleinrichtung (52) selbsttätig mit dem Synchronisationssignal (107) synchronisierbar ist.

17. Fadenliefervorrichtung nach Anspruch 16, dadurch gekennzeichnet, daß die Regeleinrichtung (52) einen elektronischen Schalter (105) aufweist, der von einer Steuerschaltung (108) angesteuert ist, die Mittel (110, 111) enthält, um das ihr zugeleitete Synchronisationssignal (107) mit dem für die Fadenspannung kennzeichnenden, von dem Signalgeber (28) abgegebenen Signal zu vergleichen und, abhängig von dem Vergleichsergebnis, ein Umschaltsignal an den elektronischen Schalter (105) abzugeben.

18. Fadenliefervorrichtung nach einem der vorhergehenden Ansprüche, dadurch gekennzeichnet, daß der Motor ein Schrittmotor (3) ist.

19. Fadenliefervorrichtung nach einem der Ansprüche 6 bis 18, dadurch gekennzeichnet, daß der Signalgeber (28) ein analoges Signal abgibt und die Regeleinrichtung (52) einen der dieses analoge Signal verarbeitenden Schaltungsanordnung (63, 64, 65, 66) nachgeschalteten Spannungs-/Frequenzwandler (67) aufweist, der das Frequenzsignal (53) erzeugt.

20. Fadenliefervorrichtung nach den Ansprüchen 3 und 19, dadurch gekennzeichnet, daß zwischen dem Integrator (63, 64) und dem Spannungs-/Frequenzwandler (67) eine Schwellwertschaltung (65) für die übertragene Signalspannung angeordnet ist.

21. Fadenliefervorrichtung nach Anspruch 19, dadurch gekennzeichnet, daß der Spannungs-/Frequenzwandler (67) eine einstellbare Nullpunktsunterdrückung aufweist, derart, daß der Minimalwert der Ausgangs frequenz auf die Start-/Stopp-Frequenz des Motors (3) abgestimmt ist.

22. Fadenliefervorrichtung nach einem der Ansprüche 18–21, dadurch gekennzeichnet, daß der Spannungs-/Frequenzwandler (67) eine Einrichtung (84) zur Veränderung seiner Steilheit aufweist.

23. Fadenliefervorrichtung nach einem der vorhergehenden Ansprüche, dadurch gekennzeichnet, daß bei stillgesetztem Motor (3) die Fadenspannung durch die Regeleinrichtung (52) auf einem vorbestimmten Wert gehalten ist, der gleich oder kleiner dem eingestellten Sollwert ist.

24. Fadenliefervorrichtung nach Anspruch 23, dadurch gekennzeichnet, daß die Regeleinrichtung (52) Mittel (120) aufweist, durch die der Sollwert der Fadenspannung bei gegenüber der Ausgangsgröße in vorgegebenem Maße größer gewordener Fadenreserve auf einen vorbestimmten kleineren Wert absenkbar und bei sich wieder verkleinernder Fadenreserve auf seinen ursprünglichen Wert rückstellbar ist.

25. Fadenliefervorrichtung nach den Ansprüchen 9 und 24, dadurch gekennzeichnet, daß der Bewegungsweg des beweglichen Fadenführelementes (21) einen ersten Bereich (A + B, C) aufweist, innerhalb dessen es mit der eingestellten Sollwert-Kraft beaufschlagt ist und an den sich in der Richtung auf eine sich vergrößernde Fadenreserve zu ein zweiter Bereich (C) anschließt, in dem die Sollwert-Kraft auf einen verkleinerten Wert abgesenkt ist und daß die Mittel (120) zu dieser Veränderung des Sollwertes durch den das stellungsabhängige Signal abgebenden Signalgeber (28) angesteuert sind.

26. Fadenliefervorrichtung nach einem der Ansprüche 9 bis 25, dadurch gekennzeichnet, daß der Bewegungsweg des Fadenführelementes (21) einen Arbeitsbereich (A) aufweist, innerhalb dessen das Fadenführelement (21) im Normalbetrieb eine durch die Fadenliefergeschwindigkeit gegebene Stellung einnimmt und daß anschließend an diesen Arbeitsbereich (A) ein Abstellbereich (B) vorgesehen ist, und daß bei in dem Abstellbereich (B) stehendem Fadenführelement (21) die Regeleinrichtung (52) das von dem Signalgeber (28) abgegebene Signal im Sinne der Stillsetzung des Motors (3) verarbeitet.

27. Fadenliefervorrichtung nach einem der vorhergehenden Ansprüche, dadurch gekennzeichnet, daß das Fadenlieferelement ein Fadenrad (5) oder eine Fadentrommel ist, das bzw. die von dem Faden (17) umschlungen ist und durch das bzw. die der Faden (17) im wesentlichen schlupflos förderbar ist.

28. Fadenliefervorrichtung nach einem der Ansprüche 1 bis 26, dadurch gekennzeichnet, daß das Fadenlieferelement wenigstens eine mit dem Umfang einer Fadenabzugsspule (152) oder eines Fadenwickelkörpers reibschlüssig kuppelbare, zylindrische Antriebswalze (150) ist.

29. Fadenliefervorrichtung nach Anspruch 28, dadurch gekennzeichnet, daß die Antriebswalze (150) mit einer zweiten achsparallel im Abstand angeordneten zylindrischen Walze (151) an gemeinsamen Halterungsmitteln (1) mit horizontaler Ausrichtung unter Ausbildung wenigstens einer Abspulstelle in einem Abstand drehbar gelagert ist, der kleiner als der Durchmesser der Spulenhülse (153) der Fadenabzugsspule ist.

30. Fadenliefervorrichtung nach Anspruch 29, dadurch gekennzeichnet, daß auch die zweite Walze (151) mit einer ihr die gleiche Umfangsgeschwindigkeit wie die Antriebswalze (150) erteilenden Antriebsvorrichtung (159, 160) gekuppelt ist, die mit dem Antrieb (3) der Antriebswalze zwangsläufig synchronisiert ist.

31. Fadenliefervorrichtung nach Anspruch 30, dadurch gekennzeichnet, daß die zweite Walze (151) durch einen eigenen frequenzgeregelten elektrischen Motor (3) angetrieben ist, der mit dem Antriebsmotor (3) der Antriebswalze (150) auf elektrischem Wege synchronisiert ist.

32. Fadenliefervorrichtung nach Anspruch 30, dadurch gekennzeichnet, daß die beiden Walzen (150, 151) durch ein formschlüssiges Getriebe (159, 160) miteinander synchronisiert sind.

33. Fadenliefervorrichtung nach einem der Ansprüche 29 bis 32, dadurch gekennzeichnet, daß die beiden Walzen (150, 151) an den Halterungsmitteln (1) unter Ausbildung wenigstens zweier Abspulstellen auf gegenüberliegenden Seiten vorragend drehbar gelagert sind (Fig. 14).

34. Fadenliefervorrichtung nach einem der Ansprüche 27 bis 33, dadurch gekennzeichnet, daß wenigstens zwei Abspulstellen eine gemeinsame elektrische Regeleinrichtung (52) zugeordnet ist.

**Claims**

1. A thread delivery device having an electronic thread tension control system for thread processing textile machines, more particularly knitting or hosiery machines, having: a pivotably mounted thread delivery element which conveys the thread preferably in a substantially non-slipping manner and with which thread guide elements are associated and which is coupled to and driven by a frequency-controlled electric motor; thread tension feeling means which are disposed on the path of the thread downstream of the thread delivery element and which monitor the thread running off the thread delivery element and delivery an electric signal; and an electric control system which processes such signal and supplies a frequency signal to the motor in order to maintain the monitored thread tension constant at an adjusted required value, characterized in that disposed in the path of the thread downstream of the thread deliver element (5) is a device (15, 16, 19) which forms a thread reserve and whose size is adequate to cover the thread requirement during the starting of the motor (3); associated with such device (15, 16, 19) are means (28, 52) to immediately fill up the thread reserve to an initial value at the latest after the motor (3) has started; and the control system (52) has a circuit arrangement (63, 64) which so limits the change in time of the frequency of the frequency signal (53), at least during the starting of the motor (3), that the loaded motor (3) can follow the change in frequency.

2. A thread delivery device according to claim 1, characterized in that by the circuit arrangement (63, 64) the change in the frequency of the frequency signal (53) is so limited, also at least during the slowing down of the motor (3), that the loaded motor (3) can follow the change in frequency, and associated with the device for forming the thread reserve are means (28, 52, 25) for taking into the thread reserve the surplus quantity of thread supplied during the slowing-down of the motor (3).

3. A thread delivery device according to claims 1 or 2, characterized in that the circuit arrangement has an integrator (63, 64) for the electric signal delivered by the thread tension feeling means.

4. A thread delivery device according to claim 3, characterized in that the integrator (63) associated with the starting of the motor (3) has a higher time constant than the integrator (64) associated with the slowing down of the motor (3).

5. A thread delivery device according to claim 4, characterized in that the two integrators (63, 64) are formed by an RC section (72, 73; 76) whose ohmic resistance can be switched over to two different values in dependence on the signal.

6. A thread delivery device according to any of the preceding claims, characterized in that the device for forming the thread reserve has at least one thread guide element (21) which is mounted to move over a predetermined path and with which at least one fixed thread guide element (15; 16; 158) is associated and which cooperates with the movable thread guide element (21) to form a lengthened thread path, and the movable thread guide element (21) is acted upon by an adjustable required value of force operating against the thread-pulling force operating on the movable thread guide element and is coupled to a signal transmitter (28) of the feeling means which generates a signal depending on the position of the movable thread guide element (21).

7. A thread delivery devicer according to claim 6, characterized in that the signal transmitter (28) is an electro-optical signal transmitter scanning the movable thread guide element (21) or a member (32) connected thereto.

8. A thread delivery device according to claims 6 or 7, characterized in that the signal generated by the signal transmitter (28) stands in a given functional dependence on the particular position of the movable thread guide element (21), such that the signal increases subproportionally with increasing deflection of the thread guide element (21) in the direction of increasing thread tension.

9. A thread delivery device according to claim 6, characterized in that the required value of force operating on the movable thread guide element (21) is constant substantially independently of travel.

10. A thread delivery device according to claim 6, characterized in that the movable thread guide element is a pivotably mounted thread guide lever (21) bearing at least one thread guiding member (19).

11. A thread delivery device according to any of claims 6 to 10, characterized in that the movable thread guide element (21) is coupled to an electro-magnetic required value transmitter (25) which generates the required value of force and whose current is adjustable.

12. A thread delivery device according to claim 11, characterized in that the electro-magnetic required force transmitter is connected to the control system (52) which, when a change takes place in the electric signal delivered by the signal transmitter (28), temporarily superimposes on such signal a compensation signal which influences the required value of force in order to counteract the change in thread tension.

13. A thread delivery device according to claim 12, characterized in that the compensation signal is derived via a differential element (59) from the signal delivered by the signal transmitter (28).

14. A thread delivery device according to any of claims 11 to 13, characterized in that the electro-magnetic required value transmitter (25) has an input (at 62) for signals arriving from a central transmitter to adjust the required value of force.

15. A thread delivery device according to any of claims 6 to 14, characterized in that the path of movement of the movable thread guide element (21) is limited, and arranged in such path of movement adjacent the boundaries (33, 34) are feelers (35, 36; 43, 44) which cooperate with the thread guide element (21) and each deliver a disconnection signal for the motor (3) and/or the machine.

16. A thread delivery device according to any of the preceding claims, characterized in that the control system (51) has an input (106) for a synchronization signal (107) arriving from an outer synchronization source, and after a speed corresponding to the adjusted required value of thread tension has been reached, the motor (3) can be automatically synchronized with the synchronization signal (107) by the control system (52).

17. A thread delivery device according to claim 16, characterized in that the control system (52) has an electronic switch (105) operated by a control circuit (108) comprising means (110, 111) for comparing the synchronization signal (107) supplied to such circuit with the signal delivered by the signal transmitter (28) and characterizing the thread tension, and for delivering a changeover signal to the electronic switch (105) in dependence on the result of the comparison.

18. A thread delivery device according to any of the preceding claims, characterized in that the motor is a stepping motor (3).

19. A thread delivery device according to one of claims 6 to 18, characterized in that the signal transmitter (28) delivers an analog signal and the control system (52) has a voltage-to-frequency converter (67) which is connected to the circuit arrangement (63, 64, 65, 66) processing the analog signal and which generates the frequency signal (53).

20. A thread delivery device according to claims 3 and 19, characterized in that a threshold value circuit (65) for the transmitted signal voltage is disposed between the integrator (63, 64) and the voltage-to-frequency converter (67).

21. A thread delivery device according to claim 19, characterized in that the voltage-to-frequency converter (67) has zero point suppression, such that the minimum value of the output frequency is adapted to the start-stop frequency of the motor (3).

22. A thread delivery device according to any of claims 18 to 21, characterized in that voltage-to-frequency converter (67) has a device (84) for changing its steepness.

23. A thread delivery device according to any of the preceding claims, characterized in that when the motor (3) is stopped, the thread tension is maintained by the control system (52) at a predetermined value which is equal to or lower than the adjusted required value.

24. A thread delivery device according to claim 23, characterized in that the control system (52) has means (120) via which the required value of the thread tension can be reduced to a predetermined lower value, if the thread reserve decreases to a given extent in comparison with the initial value, and restored to its original value when the thread reserve diminishes again.

25. A thread delivery device according to claims 9 and 24, characterized in that the path of movement of the movable thread guide element (21) has a first zone (A + B, C) within which such element is acted upon by the adjusted required value of force and which is adjoined in the direction of an increasing thread reserve by a second zone (C) in which the required value of force is reduced to a lower value, and the means (120) for changing the required value in this way are operated by the signal transmitter (28) delivering the position-dependent signal.

26. A thread delivery device according to any of claims 9 to 25, characterized in that the path of movement of the thread guide element (21) has a working zone (A), within which the thread guide element (21) in normal operation occupies a position given by the thread delivery speed, and the working zone (A) is followed by a disconnection zone (B), and when the thread guide element (21) stands in the disconnection zone (B), the control system (52) processes the signal delivered by the signal transmitter (28) to stop the motor (3).

27. A thread delivery device according to any of the preceding claims, characterized in that the thread delivery element is a thread wheel (5) or a thread drum around which the thread (17) is looped and by which the thread (17) can be conveyed in a substantially non-slipping manner.

28. A thread delivery device according to one of claims 1 to 26, characterized in that the thread delivery element is at least one cylindrical drive roller (150) which can be coupled in frictional engagement to the periphery of a thread take-off bobbin (152) or a thread winding member.

29. A thread delivery device according to claim 28, characterized in that the drive roller (150) is pivotably mounted, with a second cylindrical roller (151), disposed axis-parallel at a distance on common retaining means (1), with horizontal alignment and the formation of at least one unwinding place, at a distance which is smaller than the diameter of the bobbin sleeve (153) of the thread take-off bobbin.

30. A thread delivery device according to claim 29, characterized in that the second roller (151) is also coupled to a drive device (151, 160) which drives the second roller the same peripheral speed as the drive roller (150) and which is constrainedly synchronized with the drive (3) of the drive roller.

31. A thread delivery device according to claim 30, characterized in that the second roller (151) is driven by its own frequency-controlled electric motor (3), which is electrically synchronized with the drive motor (3) of the drive roller (150).

32. A thread delivery device according to claim 30, characterized in that the two rollers (150, 151) are synchronized with one another via a positively connected transmission (159, 160).

33. A thread delivery device according to any of claims 29 to 32, characterized in that the two rollers (150, 151) are rotatably mounted on the retaining means (1) projecting on opposite sides thereof, thereby forming at least two unwinding places (Fig. 14).

34. A thread delivery device according to one of claims 27 to 33, characterized in that a common electric control system (52) is associated with at least two unwinding places.

**Revendications**

1. Dispositif fournisseur de fil à réglage électronique de la tensin du fil pour machines textiles travaillant les fils, en particulier pour machines à tricoter, constitué par un élément fournisseur de fil monté rotatif, transportant le fil, de préférence presque sans glissement, auquel sont associés des éléments guide-fil et qui est accouplé à un moteur électrique l'entraînant réglé en fréquence, par des moyens de surveillance de la tension du fil, placés dans le trajet du fil derrière l'élément fournisseur, surveillant le fil sortant de celui-ci et émettant un signal électrique, ainsi que par un dispositif de réglage électrique traitant ce signal et alimenant le moteur en vue du maintien constant de la tension du fil surveillée à une valeur de consigne réglée, caractérisé par le fait que sur le trajet du fil derrière l'élément fournisseur (5) est installé un dispositif (15, 16, 19) pour la formation d'une réserve de fil dont la grandeur est suffisante pour couvrir le besoin en fil pendant le démarrage du moteur (3), qu'à ce dispositif (15, 16, 19) sont associés des moyens (28, 52) pour ramener la réserve de fil automatiquement à sa grandeur initiale au plus tard après le démarrage du moteur (3), et que le dispositif de réglage (52) comporte un montage (63, 64) qui limite la variation dans le temps de la fréquence du signal de fréquence (53) au moins pendant le démarrage du moteur (3) de façon que le moteur sous charge (3) puisse suivre la variation de fréquence.

2. Dispositif fournisseur de fil selon la revendication 1, caracatérisé par le fait que le montage (63, 64) limite également la variation de la fréquence du signal de fréquence (53) au moins pendant l'arrêt du moteur (3) de manière que le moteur sous charge (3) puisse suivre la variation de fréquence, et qu'au dispositif pour la formation de la réserve de fil sont associés des moyens (28, 52, 25) pour amener à la réserve de fil la quantité de fil excédentaire fournie pendant l'arrêt du moteur (3).

3. Dispositif fournisseur de fil selon la revendication 1 ou 2, caractérisé par le fait que le montage comporte un intégrateur (63, 64) pour le signal électrique délivré par les moyens de surveillance de la tension du fil.

4. Dispositif fournisseur de fil selon la revendication 3, caractérisé par le fait que l'intégrateur (63), associé au démarrage du moteur (3), a une constante de temps plus grande que l'intégrateur (64) associé à l'arrêt du moteur (3).

5. Dispositif fournisseur de fil selon la revendication 4, caractérisé par le fait que les deux intégrateurs (63, 64) sont formés par un organe à circuit RC (72, 73; 76) dont la résistance ohmique peut être commutée sur deux valeurs différentes en fonction du signal.

6. Dispositif fournisseur de fil selon l'une des revendications précédentes, caractérisé par le fait que le dispositif pour la formation de la réserve de fil comprend au moins un élément guide-fil (29) monté mobile sur un trajet prédéterminé et auquel est associé au moins un élément guide-fil fixe (15; 16; 158) qui, avec l'élément guide-fil mobile (21), forme un trajet prolongé de la marche du fil et que l'élément guide-fil mobile (21) est soumis à une force de valeur de consigne réglable agissant à l'encontre de la force de traction du fil agissant sur lui et est accouplé à un poste transmetteur de signaux (28) des moyens de surveillance lequel produit un signal dépendant de la position de l'élément guide-fil mobile (21).

7. Dispositif fournisseur de fil selon la revendication 6, caractérisé par le fait que le poste transmetteur de signaux (28) est un transmetteur électro-optique balayant l'élément guide-fil mobile (21) ou une partie (32) raccordée à celui-ci.

8. Dispositif fournisseur de fil selon la revendication 6 ou 7, caractérisé par le fait que le signal produit par le poste transmetteur de signaux (28) est en relation fonctionnelle prédéterminée avec la position à chaque fois considérée de l'élément guide-fil mobile (21) de manière que le signal augmente dans une proportion plus petite que la déviation de l'élément de guide-fil (21) au sens d'un accroissement de la tension du fil.

9. Dispositif fournisseur de fil selon la revendication 6, caractérisé par le fait que la force de valeur de consigne agissant sur l'élément guide-fil mobile (21) est sensiblement constante indépendamment du trajet.

10. Dispositif fournisseur de fil selon la revendication 6, caractérisé par le fait que l'élément guide-fil mobile est un levier (21) monté pivotable et portant au moins un organe (19) guidant le fil.

11. Dispositif fournisseur de fil selon l'une des revendications 6–10, caractérisé par le fait que l'élément guide-fil mobile (21) est accouplé à un transmetteur électromagnétique (25) de la valeur de consigne qui produit la force de consigne exigée et dont le courant est réglable.

12. Dispositif fournisseur de fil selon la revendication 11, caractérisé par le fait que le transmetteur électromagnétique de la valeur de consigne est raccordé au dispositif de réglage (52) qui, à l'apparition d'une variation du signal électrique délivré par le poste transmetteur de signaux (28), lui applique momentanément un signal de compensation modifiant la force de consigne dans un sens contrant la variation de la tension du fil.

13. Dispositif fournisseur de fil selon la revendication 12, caractérisé par le fait que le signal de compensation est dérivé par un organe différenciateur (59) du signal délivré par le poste transmetteur (28).

14. Dispositif fournisseur de fil selon l'une des revendications 11–13, caractérisé par le fait que le transmetteur électromagnétique (25) de la valeur de consigne comporte une entrée (en 62) pour les signaux provenant d'un poste transmetteur central et réglant la force de consigne.

15. Dispositif fournisseur de fil selon l'une des revendications 6–14, caractérisé par le fait que la course de l'élément guide-fil mobile (21) est limitée et que dans la course, à proximité des limites (33, 34), sont installés des capteurs (35, 36; 43, 44) qui coopèrent avec l'élément guide-fil (21) et délivrent un signal d'arrêt pour le moteur (3) et-ou la machine.

16. Dispositif fournisseur de fil selon l'une des revendications précédentes, caractérisé par le fait que le dispositif de réglage (52) comporte une entrée (106) pour un signal de synchronisation (107) provenant d'une source de synchronisation extérieure et que le moteur (3), après l'atteinte d'une vitesse de rotation correspondant à la tension de consigne réglée du fil, peut être automatiquement synchronisé avec le signal de synchronisation (107) par le dispositif de réglage (52).

17. Dispositif fournisseur de fil selon la revendication 16, caractérisé par le fait que le dispositif de réglage (52) comporte un interrupteur électronique (105) qui est activé par un circuit de commande (108) lequel contient des moyens (110, 111) pour comparer le signal de synchronisation (107) qui lui est appliqué au signal caractérisant la tension du fil délivré par le poste transmetteur de signaux (28) et qui, en fonction du résultat de la comparaison, envoie un signal de commutation à l'interrupteur électronique (105).

18. Dispositif fournisseur de fil selon l'une des revendications précédentes, caractérisé par le fait que le moteur est un moteur pas à pas (3).

19. Dispositif fournisseur de fil selon l'une des revendications 6 à 18, caractérisé par le fait que le poste transmetteur de signaux (28) émet un signal analogique et que le dispositif de réglage (52) comporte un convertisseur tension/fréquence (67) qui est monté en aval du montage (63, 64, 65, 66) traitant ce signal analogique et qui produit le signal de fréquence (53).

20. Dispositif fournisseur de fil selon les revendications 3 et 19, caractérisé par le fait qu'entre l'intégrateur (63, 64) et le convertisseur tension/fréquence (67) est interposé un circuit à valeur de seuil (65) pour la tension de signal transmise.

21. Dispositif fournisseur de fil selon la revendication 19, caractérisé par le fait que le convertisseur tension/fréquence (67) comporte une suppression du point zéro réglable de manière que la valeur minimale de la fréquence de sortie soit accordée à la fréquence marche/arrêt du moteur (3).

22. Dispositif fournisseur de fil selon l'une des revendications 18–21, caractérisé par le fait que le convertisseur tension/fréquence (67) comporte un dispositif (84) pour la variation de sa pente.

23. Dispositif fournisseur de fil selon l'une des revendications précédentes, caractérisé par le fait qu'à l'arrêt du moteur (3), la tension de fil est maintenue par le dispositif de réglage (52) à une valeur prédéterminée qui est égale ou inférieure à la valeur de consigne réglée.

24. Dispositif fournisseur de fil selon la revendication 23, caractérisé par le fait que le dispositif de réglage (52) comporte des moyens (120) par lesquels la valeur de consigne de la tension du fil, en cas d'une réserve de fil ayant augmentée au-delà d'une grandeur déterminée par rapport à la grandeur initiale, peut être abaissée à une plus petite valeur prédéterminée et ramenée à sa valeur initiale en cas de réserve de fil recommençant à diminuer.

25. Dispositif fournisseur de fil selon les revendications 9 et 24, caractérisé par le fait que la course de l'élément guide-fil mobile (21) présente une première zone (A + B, C) à l'intérieur de laquelle il est soumis à la force de consigne réglée et à laquelle se rattache, dans le sens d'une réserve de fil allant en augmentant, une seconde zone (C) dans laquelle la force de consigne est abaissée à une plus petite valeur, et que les moyens (120) pour cette variation de la valeur de consigne sont activés par le poste transmetteur de signaux (28) délivrant le signal dépendant de la position.

Dispositif fournisseur de fil selon l'une des revendications 9 à 25, caractérisé par le fait que la course de l'élément guide-fil (21), comporte une zone de travail A, à l'intérieur de laquelle l'élément guide-fil (21) en fonctionnement normal, occupe une position déterminée par la vitesse du fournisseur de fil, qu'une zone de repos (B) est prévue à la suite de cette zone de travail (A) et qu'en cas d'arrêt de l'élément guide-fil (21) dans la zone de repos (B), le dispositif de réglage (52) traite le signal délivré par le poste transmetteur (28) au sens de l'arrêt du moteur (3).

27. Dispositif fournisseur de fil selon l'une des revendications précédentes, caractérisé par le fait que l'élément fournisseur de fil est une roue (5) ou un tambour qui est embrassé(e) par le fil (17) et par laquelle ou lequel le fil (17) peut être transporté sensiblement sans glissement.

28. Dispositif fournisseur de fil selon l'une des revendications 1 à 26, caractérisé par le fait que l'élément fournisseur de fil au moins est un rouleau d'entraînement cylindrique (150) pouvant être accouplé par une liaison par friction à la périphérie d'une bobine débitrice de fil (152) ou d'un corps bobiné.

29. Dispositif fournisseur de fil selon la revendication 28, caractérisé par le fait que le rouleau d'entraînement (150), avec un second rouleau cylindrique (151), disposé à distance et parallèlement à l'axe, est monté rotatif sur des moyens de support communs (1) disposé horizontalement en formant au moins un poste dévideur à une distance qui est plus petite que le diamètre du tube (153) de la bobine débitrice.

30. Dispositif fournisseur de fil selon la revendication 29, caractérisé par le fait que le second rouleau (151) est aussi accouplé à un dispositif d'entraînement (159, 160) qui lui imprime la même vitesse périphérique que le rouleau d'entraînement (150) et qui est synchronisé par voie mécanique au moteur (3) du rouleau d'entraînement.

31. Dispositif fournisseur de fil selon la revendication 30, caractérisé par le fait que le second rouleau (151) est entraîné par son propre moteur électrique (3) qui est réglé en fréquence et qui est synchronisé par voie électrique au moteur (3) du rouleau d'entraînement (150).

32. Dispositif fournisseur de fil selon la revendication 30, caractérisé par le fait que les deux rouleaux (150, 151) sont mutuellement synchronisés par une transmission mécanique (159, 160).

33. Dispositif fournisseur de fil selon l'une des revendications 29 à 32, caractérisé par le fait que les deux rouleaux (150, 151) sont montés rotatifs et en saillie sur les moyens de support (1) en formant réciproquement au moins deux postes de dévidage sur des côtés opposés (figure 14).

34. Dispositif fournisseur de fil selon l'une des revendications 27 à 33, caractérisé par le fait qu'un dispositif de réglage électrique commun (52) est associé à au moins deux postes de dévidage.

**Fig. 1**

**Fig. 2**

**Fig.3**

EP 0 256 519 B1

Fig. 4

24

Fig. 5

Fig. 6

Fig. 9

Fig. 7

Fig. 8

EP 0 256 519 B1

Fig. 10

Fig. 11

Fig. 12

Fig . 13

*Fig . 14*

Fig. 15

Fig . 16

EP 0 256 519 B1